# NOUVEAU FASCICULE DE BREVET EUROPEEN

(11) **EP 3 318 940 B2**
(45) Date de publication et mention de la décision concernant l'opposition: **03.04.2024**
(45) Mention de la délivrance du brevet: 14.04.2021
(21) Numéro de dépôt: 17199858.6
(22) Date de dépôt: 03.11.2017
(51) Int. Cl.: G05B 19/416, B23Q 5/32, B23B 35/00

(54) **PROCÉDÉ DE PERÇAGE COMPRENANT UNE MESURE DE TRAINÉE(S), ET DISPOSITIF DE PERÇAGE CORRESPONDANT**
BOHRVERFAHREN, DAS EINE STRÖMUNGSWIDERSTANDSMESSUNG UMFASST, UND ENTSPRECHENDE BOHRVORRICHTUNG
DRILLING METHOD COMPRISING A MEASUREMENT OF DRAG, AND CORRESPONDING PIERCING DEVICE

(30) Priorité: 04.11.2016 FR 1660715
(43) Date de publication de la demande: 09.05.2018
(73) Titulaire: Seti-Tec, 77090 Collégien (FR)
(72) Inventeur: PEREIRA, Sébastien, 2820-543 CHARNECA DA CAPARICA (PT)
(74) Mandataire: Vidon Brevets & Stratégie

(56) Documents cités:
- EP-A1- 1 618 978
- EP-A1- 1 982 783
- US-A- 4 451 187
- US-A- 4 854 786

## Description

### 1. Domaine de l'invention

Le domaine de l'invention est celui des techniques de perçage notamment d'éléments multicouches, c'est-à-dire comprenant un empilement de plusieurs couches de matériaux différents.

L'invention concerne en particulier les procédés de perçage ainsi que les dispositifs mis en œuvre à cet effet.

### 2. Art antérieur

Des matériaux multicouches sont de plus en plus couramment mis en œuvre, notamment dans le domaine de l'aéronautique, pour fabriquer des avions.

Ces matériaux multicouches se composent d'une pluralité de couches successives empilées réalisées dans des matériaux différents.

Au rang des matériaux entrant dans la composition de ces matériaux multicouches figurent notamment les alliages d'aluminium, les alliages de titane, la fibre de carbone stratifiée, le GLARE (pour « *Glass Laminate Aluminium Reinforced Epoxy »* en langue anglaise), l'acier inoxydable, l'Inconel...

Dans le domaine de l'industrie aéronautique, ces matériaux multicouches sont souvent percés au moyen :
- de perceuses manuelles au cours de la mise en œuvre desquelles la poussée sur le foret est générée manuellement ;
- des perceuses au cours de la mise en œuvre desquelles l'avance du foret est motorisée, leur corps étant fixé à un support durant le perçage et déplacé manuellement par un opérateur d'un point de perçage à un autre ; au rang de ces perceuses figurent :
   - les perceuses à avance automatique pour lesquelles la vitesse d'avance et la fréquence de rotation du foret sont dépendants, et
   - les perceuses à paramètres de coupe contrôlés pour lesquelles la vitesse d'avance et la fréquence de rotation du foret peuvent varier indépendamment l'une de l'autre ;
- les robots de perçage, assimilables à des machines-outils, au cours de la mise en œuvre desquels, la fréquence de rotation et la vitesse d'avance du foret peuvent être contrôlées indépendamment l'une de l'autre comme pour les perceuses à paramètres de coupe contrôlés.

La présente invention est plus particulièrement destinée à être mise en œuvre dans le cadre des perceuses à paramètres de coupe contrôlés et des robots de perçage. De tels dispositifs de perçage, encore appelés dispositifs de perçage à paramètres de coupe contrôlés, sont reliés à un boitier de commande contenant notamment le programme de perçage, c'est-à-dire toutes les informations permettant de mettre en œuvre une stratégie de perçage de manière automatique.

De tels dispositifs de perçage comprennent classiquement un carter, logeant un moteur d'avance et un moteur de rotation, à l'extrémité duquel s'étend une broche destinée à entrainer un outil de coupe comme un foret, les moteurs étant reliés à la broche via une transmission.

Ces dispositifs de perçage permettent d'assurer le perçage d'un élément à percer au cours d'une opération de perçage qui comprend classiquement une phase d'approche du foret en direction de l'élément à percer, une phase de centrage du foret, une phase de perçage proprement dite avec des paramètres de coupe adaptés au(x) matière(s) rencontrées(s), une phase de sortie du foret de la pièce à percer puis de retrait.

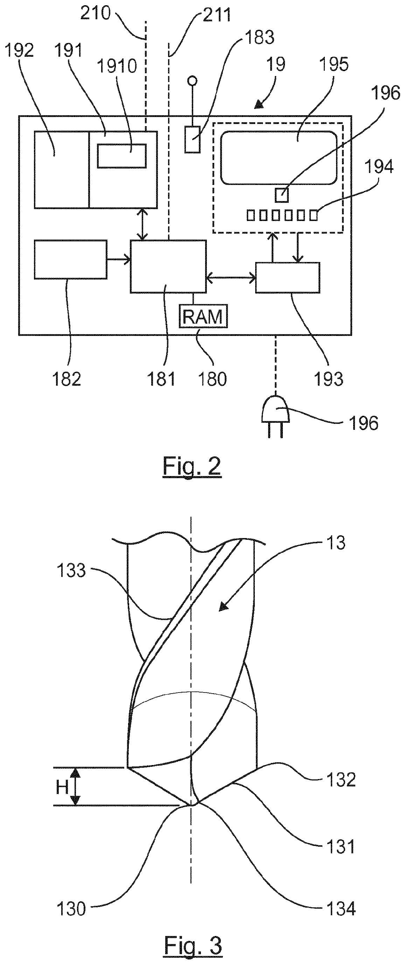

En référence à la figure 3, la pointe d'un foret 13 comprend classiquement une arête centrale 130 prolongée latéralement par des arêtes principales 131 qui s'achèvent par des becs de coupe 132. Les becs de coupe 132 se prolongent par des listels 133 qui s'étendent de manière hélicoïdale et définissent le diamètre du foret. La surface qui s'étend entre l'arête centrale 130 et les becs de coupe 132, comprend la pointe d'extrémité 134 du foret, définit le cône du foret qui présente une hauteur H.

La fonction du foret est de couper la matière suivant une trajectoire définie par les paramètres de coupe (notamment vitesse de rotation, avance par tour avec éventuellement une composante alternative).

Les matières présentent des difficultés de perçage différentes compte tenu de leurs différences de résiliences, d'adhésion et d'abrasivité. Ceci impose l'utilisation de des paramètres de coupe propres à chaque matière pour obtenir :
- une qualité maitrisée ;
- une productibilité optimum ;
- une usure de foret acceptable.

La mesure et la surveillance de la charge sur le foret (couple ou effort de poussée selon l'axe de perçage) au cours d'une opération de perçage peut contribuer à la maitrise de la qualité du perçage et de la gestion de l'usure du foret.

En effet, pour des paramètres de coupe donnés, la charge sur le foret augmente avec l'usure du foret, sa surveillance permettant alors de remplacer le foret lorsque la charge devient trop importante ce qui traduit que le foret est usé.

Par ailleurs, il est possible, au cours d'une opération de perçage, de détecter un changement de matière, d'identifier la matière nouvellement rencontrée par le foret, et d'adapter en conséquence les paramètres de coupe, ceci sur la base d'une surveillance de la charge sur le foret.

Une telle technique repose, lorsque le foret perce une matière donnée avec des paramètres de coupe donnés propre à cette matière (ces paramètres sont dits « paramètres de coupe matière »), sur une comparaison des valeurs de charge auxquelles est soumis le foret avec des intervalles de valeur de charge prédéterminés propres à cette matière percée par un type de foret donné et ses paramètres de coupe.

Lorsque lesdites valeurs de charges sortent de l'intervalle prédéterminé de la matière supposée être en cours de perçage, alors une nouvelle matière a été rencontrée par le foret.

Il est alors possible d'identifier la nouvelle matière en cours de perçage en appliquant des paramètres de coupe identiques pour chacune des matières du groupe des matières composant la pièce à percer avec un foret donné (ces paramètres de coupe sont dit « paramètres de coupe de référence »), et en comparant les valeurs de charges sur le foret avec des intervalles de référence prédéterminés. Ces intervalles de référence sont prédéterminés en laboratoire pour chaque matière percée avec les paramètres de coupe de référence et un foret similaire à celui utilisé.

La nouvelle matière identifiée est celle dont l'intervalle de valeur de charge contient la valeur de charge mesurée durant le perçage avec les paramètres de référence.

Les paramètres de coupe de référence sont, pour un groupe de matières donné, les paramètres de coupe contraignants basés sur les valeurs de vitesse de coupe et d'avance du, ou des, matériaux du groupe imposants des valeurs limites minimum ou maximum, en dessous ou, au-dessus desquelles un inconvénient majeur apparait, tel que l'usure prématurée des arêtes de coupe du foret.

Une valeur de charge sur le foret peut être :
- la mesure d'un capteur de couple placé sur la transmission entre le moteur de rotation du foret, et le foret traduisant le couple appliqué sur le foret ;
- la mesure d'un capteur d'effort placé sur la broche traduisant la poussée axiale sur le foret ;
- la mesure de la puissance ou d'intensité consommée par le moteur de rotation du foret, traduisant le couple appliqué sur le foret (en prenant en compte le ratio de transmission dans le cas de perceuse bi-vitesse ;
- la mesure de la puissance ou d'intensité consommée par le moteur d'avance du foret, traduisant la poussée appliquée sur le foret.

Ce procédé exploite donc le fait que chaque type de matière va engendrer les arêtes du foret, soumis à des paramètres de coupe de référence donnés, des efforts différentes entre les différents types de matière.

Pour que ce procédé soit efficace, il faut donc que les valeurs de charge obtenues lors de l'application des paramètres de coupe de référence soient:
- répétables avec une faible dispersion pour une même matière et un même foret, autrement dit que les intervalles de valeur de charge prédéterminés soient étroits ;
- distinctes entre les différents types de matière.

Plus ces intervalles sont distincts et répétables, plus le risque de confondre deux matières différentes dans le procédé de détermination de la matière rencontrée par un foret, est faible et donc plus le procédé est fiable.

Une façon de rendre distinctes ces valeurs de charge entre les différentes matières consiste à choisir des paramètres de référence (avance ou vitesse de coupe) les plus forts dans la limite permise des paramètres contraignants. Plus les paramètres de référence seront forts, plus les efforts sur le foret seront grands, et plus les écarts de valeurs de charges entre les différentes matières seront importants.

Toutefois, la surveillance de la charge sur le foret, tant en vue de d'évaluer l'usure du foret que dans celui d'identifier la matière en cours de perçage, peut être rendue difficile par l'existence de phénomènes parasites ayant une incidence sur la charge du le foret.

Lors du perçage d'un trou, certains phénomènes peuvent être de nature à accentuer le frottement des listels sur les parois du trou en cours de perçage, entre autres :
- certaines matières peuvent, lors du perçage, se déformer légèrement dans leur limite élastique sous les efforts de coupe du foret et après perçage se resserrer en diamètre sur le foret : ce phénomène est rencontré parfois dans les alliages de Titane et la fibre de carbone ;
- parfois la pointe du foret peut chasser légèrement lors de son centrage sur la face d'entrée du perçage : ceci est de nature à entrainer un désaxage du foret par rapport à l'axe de la broche de perceuse et donc un frottement des listels sur les parois du trou.

Pour éviter ces frottements, une conicité arrière ou dépinçage est généralement prévue sur les listels, telle que le diamètre de queue du foret est plus petit que le diamètre des becs à raison de 10µm sur le diamètre par 10mm de longueur du foret.

Le dépinçage a pour but de créer du jeu entre les listels et les parois du trou percé et donc ainsi éviter que :
- le couple n'augmente de trop avec la profondeur percée
- la paroi du trou ne soit dégradée par frottement
- l'échauffement du perçage soit trop important

Le dépinçage ne doit toutefois pas être trop important pour ne pas dégrader le centrage du foret dans le trou et risquer ainsi que le perçage ne se désaxe par rapport à la trajectoire souhaitée.

Certaines matières sont adhérentes. Il en résulte, au cours d'un perçage, un phénomène d'adhésion de la matière coupée sur la face de coupe du foret ou sur ses listels lorsque les conditions de coupe, par exemple la lubrification, ne sont pas adéquates (adhérence typique du titane lorsque la vitesse est trop importante à cause de l'échauffement, même si la lubrification est convenable). Cela se produit avec certains alliages d'aluminium ou de Titane.

Ce phénomène d'adhésion a pour conséquences d'engendrer :
- une usure prématurée du foret, un risque de casse, de l'échauffement ;
- une géométrie et un état de surface du trou dégradée ;
- des efforts de coupe plus importants que la normale.

Un autre phénomène parasite est lié à l'évacuation des copeaux ou cours d'une opération de perçage.

Sur les forets hélicoïdaux, la remontée de copeaux s'exerce en partie naturellement par le frottement des copeaux contre la paroi du trou percé, qui tend à leur faire suivre la goujure, hélicoïdale, jusqu'à l'extraction du perçage.

L'évacuation est également obtenue par injection d'air comprimé huilé dans deux canaux présents dans le corps du foret. L'air comprimé sort des canaux en extrémité du foret sur les faces de dépouille du foret, il ressort du trou en cours de perçage en remontant par les deux goujures dans le cas des forets hélicoïdaux ou symétriques ou la goujure dans le cas des forets trois-quarts.

Lorsque le soufflage d'air comprimé ou la taille des copeaux ne sont pas satisfaisants, les copeaux peuvent faire du « bourrage », c'est-à-dire s'accumuler de manière excessive dans le trou en cours de perçage, et entrainer :
- un risque de casse, de l'échauffement ;
- un état de surface du trou dégradée ;
- des efforts de coupe plus importants que la normale.

De tels phénomènes parasites perturbent la mesure de la charge sur le foret en cours de perçage et nuisent ainsi :
- à l'évaluation de l'usure du foret,
- à l'identification de la matière en cours de perçage,
et par conséquent à la qualité d'un perçage
Le document US 4,451,187 A décrit un procédé de perçage d'un élément à percer au moyen d'un dispositif de perçage et d'un outil de coupe, ledit procédé comprenant une étape de détermination d'au moins une valeur de charge représentative de la trainée due aux frottements internes dudit dispositif de perçage, cette étape comprenant les sous étapes suivantes:
- arrêt de l'opération de perçage en cours;
- recul dudit outil de coupe sur une distance prédéterminée;
- entrainement dudit outil de coupe avec des paramètres de coupe prédéterminés;
- mesure d'au moins une valeur de charge représentative de ladite trainée due aux frottements internes dudit dispositif de perçage.

### 3. Objectifs de l'invention

L'invention a notamment pour objectif d'apporter une solution efficace à au moins certains de ces différents problèmes.

En particulier, selon au moins un mode de réalisation, un objectif de l'invention est d'optimiser la réalisation d'opérations de perçage, notamment d'améliorer la qualité des perçages et/ou de mieux générer l'utilisation des outils de coupe.

Notamment, l'invention a pour objectif, selon au moins un mode de réalisation, de fiabiliser l'identification d'une matière en cours de perçage.

Un autre objectif de l'invention est, selon au moins un mode de réalisation, de fiabiliser la détection de l'usure d'un foret.

Un autre objectif de l'invention est, selon au moins un mode de réalisation, de permettre de détecter l'existence d'un bourrage de copeaux au cours d'une opération de perçage.

Un autre objectif de l'invention est, selon au moins un mode de réalisation, de permettre d'évaluer le niveau de frottement direct ou par mauvaise évacuation des copeaux des listels d'un foret contre les parois d'un élément en cours de perçage.

Un autre objectif de l'invention est, selon au moins un mode de réalisation, de fournir une telle technique qui soit simple et/ou fiable.

### 4. Présentation de l'invention

Pour ceci, l'invention propose un procédé de perçage selon la revendication 1.

Ainsi, l'invention repose sur une approche originale qui consiste à déterminer, au cours d'une opération de perçage, la trainée globale due aux frottement internes d'un dispositif de perçage et aux frottements des listels contre les parois de l'élément percé.

Au sens de l'invention, l'arrêt de l'opération de perçage en cours, encore appelée parçage en cours ou opération de perçage, signifie que l'avance du foret dans le sens du perçage de l'élément à percer est arrêtée, le déplacement en rotation du foret pouvant ou non être maintenu à ce stade.

Dans la mesure où l'on souhaite déterminer une information représentative de la trainée globale due tant aux frottements internes au dispositif de perçage qu'aux frottements des listels contre la paroi interne du trou en cours de perçage dans l'élément à percer, le recul du foret sur une distance prédéterminée est nécessairement un recul partiel du foret de sorte que ses arêtes de coupe ne soient plus en prise avec l'élément à percer (on ne procède plus à ce stade à un enlèvement de matière) alors que ses listels se trouvent toujours à l'intérieur du trous en cours de perçage et frottent ainsi le cas échéant contre la paroi interne de celui-ci. Bien sûr, la portion des listels située à l'intérieur du trou en cours de perçage variera selon la profondeur du perçage en cours. Le recul n'induit donc pas une extraction totale en dehors du trou en cours de perçage de l'outil coupant.

La distance prédéterminée de recul est choisie de façon :
- suffisamment faible pour que la trainée globale mesurée soit la plus proche de celle subie par l'outil de coupe lorsqu'il était en action de coupe à l'instant précédent le recul, et
- suffisamment forte pour permettre la mesure de la trainée globale, soit une distance de recul de l'ordre d'un millimètre.

Un tel paramètre peut être utilisé, au cours d'une opération de perçage, pour détecter la survenue d'un événement dont la prise en considération peut permettre d'optimiser le perçage.

Par exemple, au cours d'une opération de perçage donnée, l'atteinte par la trainée globale d'un seuil haut prédéterminé pourra signifier que le foret et/ou le dispositif de perçage est usé, ou plus généralement une anomalie. L'opération de perçage pourra alors être stoppée et/ou un message d'alerte émis de sorte à ce que les mesures soient prises pour corriger le ou les problèmes survenus dans le but d'améliorer la qualité du perçage.

De préférence, un procédé selon l'invention comprend une étape de détermination d'au moins une valeur de charge représentative de la trainée des listels due au frottement desdits listels dans ledit élément à percer, cette étape comprenant les sous-étapes suivantes :
- la détermination d'au moins une valeur de charge représentatives de la trainée dudit dispositif de perçage due aux frottements internes dudit dispositif de perçage fonctionnant avec lesdits paramètres de coupe prédéterminés ;
- la soustraction, à ladite au moins une valeur de charge représentatives de la trainée globale, de ladite au moins une valeur de charge représentatives de la trainée dudit dispositif de perçage, le résultat de ladite soustraction étant égal à ladite au moins une valeur de charge représentative de la trainée des listels.

Un tel paramètre peut être utilisé, au cours d'une opération de perçage, pour détecter la survenue d'un événement dont la prise en considération peut permettre d'optimiser le perçage, notamment une mauvaise évacuation des copeaux (bourrage) ou le resserrement de la matière sur le foret.

De préférence, un procédé selon l'invention comprend une étape de détermination d'au moins une valeur de charge représentative des efforts de coupe générés par l'enlèvement de matière dudit élément à percer au cours d'une opération de perçage, comprenant les sous-étapes suivantes :
- mesure d'au moins une valeur de charge au cours du perçage dudit élément à percer avec lesdits paramètres de coupe prédéterminés ;
- soustraction, à ladite au moins une valeur de charge mesurée au cours du perçage dudit élément à percer, de ladite au moins une valeur de charge représentative de ladite trainée globale, le résultat de ladite soustraction étant égal à ladite au moins une valeur de charge représentative des efforts de coupe.

Un tel paramètre peut être utilisé, au cours d'une opération de perçage, pour détecter la survenue d'un événement dont la prise en considération peut permettre d'optimiser le perçage, notamment une usure des arêtes de coupe ou une matière adhérente.

Dans ce cas, et de préférence lesdits paramètres de coupe prédéterminés sont des paramètres de coupe de référence spécifiques au groupe de matières auquel appartient la matière en cours de perçage et au type de foret mis en œuvre pour réaliser l'opération de perçage en cours, ledit procédé comprenant en outre une étape de comparaison de ladite au moins une valeur de charge représentative des efforts de coupe avec des intervalles prédéterminés de valeur de charge de référence représentatifs des efforts de coupe, chacun desdits intervalles étant spécifique à une des matières dudit groupe.

Dans ce cas, un procédé selon l'invention peut en outre comprendre une étape d'arrêt de l'opération de perçage en cours et/ou d'émission d'un signal d'alerte lorsque ladite au moins une valeur de charge représentative des efforts de coupe n'appartient à aucun desdits intervalles de valeur de charge de référence représentatifs des efforts de coupe.

De préférence, un procédé selon l'invention comprend une étape de vérification du frottement desdits listels comprenant :
- la comparaison de ladite au moins une valeur de charge représentative de la trainée des listels à une valeur seuil prédéterminée ;
- la détection d'un frottement anormal desdits listels lorsque ladite au moins une valeur de charge représentative de la trainée des listels devient supérieure à ladite valeur seuil prédéterminée.

Dans ce cas, un procédé selon l'invention comprend préférentiellement une étape de débourrage lorsqu'il est détecté que le frottement des listels est anormal.

De préférence, lesdits paramètres de coupe prédéterminés sont des paramètres de coupe matière prédéterminés spécifiques à la matière en cours de perçage et au type de foret mis en œuvre pour réaliser l'opération de perçage en cours, un procédé selon l'invention comprenant une étape de vérification des efforts de coupe comprenant la comparaison de ladite au moins une valeur de charge représentative des efforts de coupe à un intervalle étalon de valeurs de charge de coupe matière prédéterminé spécifique à la matière en cours de perçage pour un foret dont les arêtes de coupe présentent la qualité minimale requise pour un perçage correct et pour lesdits paramètres de coupe matière prédéterminés.

Ladite étape de vérification des efforts de coupe comprend préférentiellement la détection d'efforts de coupe anomaux lorsque ladite au moins une valeur de charge représentative des efforts de coupe n'est pas comprise dans ledit intervalle étalon de valeurs de charge de coupe matière.

De préférence, un procédé selon l'invention comprend une étape d'identification de la matière en cours de perçage, ladite étape d'identification comprenant :
- une étape d'activation ou de maintien des paramètres de coupe de référence spécifiques au groupe de matières auquel appartient la matière en cours de perçage et au type de foret mis en œuvre pour réaliser l'opération de perçage en cours ;
- une étape de détermination de la matière en cours de perçage, ladite matière en cours de perçage étant celle dont l'intervalle de valeur de charges de référence représentatives des efforts de coupe contient ladite au moins une valeur de charge représentative des efforts de coupe ;
- une étape d'activation de paramètres de coupe matière prédéterminés spécifiques à la matière identifiée à ladite étape de détermination et au type de foret mis en œuvre ;
- une étape de détermination d'au moins une valeur de charge représentative des efforts de coupe avec lesdits paramètres de coupe matière ;
- une étape de validation de la matière identifiée au cours de ladite étape de détermination, ladite détermination de la matière étant validée lorsque l'au moins une valeur de charge représentative des efforts de coupe, déterminée en mettant en œuvre lesdits paramètres de coupe matière, appartient à un intervalle de valeurs de charge représentatives des efforts de coupe prédéterminé avec lesdits paramètres de coupe matière pour la matière identifiée.

La mise en œuvre d'une telle étape permet d'identifier, de manière fiable, la matière en cours de perçage.

De préférence, un procédé selon l'invention comprend une étape d'arrêt dudit perçage lorsqu'il est détecté que les efforts de coupe sont anormaux ou qu'aucune matière n'est identifiée.

De préférence, un procédé selon l'invention comprend une étape d'émission d'un signal d'alerte lorsqu'il est détecté que le frottement des listels est anormal et/ou lorsqu'il est détecté que les efforts de coupe sont anormaux et/ou qu'aucune matière n'est identifiée.

La présente invention concerne également un dispositif de perçage selon la revendication 11.

De préférence, un dispositif selon l'invention comprend des moyens de détermination d'au moins une valeur de charge représentative de la trainée des listels due au frottement desdits listels dans ledit élément à percer, ces moyens comprenant :
- des moyens de détermination d'au moins une valeur de charge représentatives de la trainée dudit dispositif de perçage due aux frottements internes dudit dispositif de perçage fonctionnant avec lesdits paramètres de coupe prédéterminés ;
- des moyens de soustraction, à ladite au moins une valeur de charge représentatives de la trainée globale, de ladite au moins une valeur de charge représentatives de la trainée dudit dispositif de perçage, le résultat de ladite soustraction étant égal à ladite au moins une valeur de charge représentative de la trainée des listels.

De préférence, un dispositif selon l'invention comprend des moyens de détermination d'au moins une valeur de charge représentative des efforts de coupe générés par l'enlèvement de matière dudit élément à percer au cours d'une opération de perçage, ces moyens comprenant :
- des moyens de mesure d'au moins une valeur de charge au cours du perçage dudit élément à percer avec lesdits paramètres de coupe prédéterminés ;
- des moyens de soustraction, à ladite au moins une valeur de charge mesurée au cours du perçage dudit élément à percer, de ladite au moins une valeur de charge représentative de ladite trainée globale, le résultat de ladite soustraction étant égal à ladite au moins une valeur de charge représentative des efforts de coupe.

De préférence, dans laquelle lesdits paramètres de coupe prédéterminés sont des paramètres de coupe de référence spécifiques au groupe de matières auquel appartient la matière en cours de perçage et au type de foret mis en œuvre pour réaliser l'opération de perçage en cours, un dispositif selon l'invention comprend des moyens de comparaison de ladite au moins une valeur de charge représentative des efforts de coupe avec des intervalles prédéterminés de valeur de charge de référence représentatifs des efforts de coupe, chacun desdits intervalles étant spécifique à une des matières dudit groupe.

De préférence, un dispositif selon l'invention comprend des moyens d'arrêt de l'opération de perçage en cours et/ou d'émission d'un signal d'alerte lorsque ladite au moins une valeur de charge représentative des efforts de coupe n'appartient à aucun desdits intervalles de valeur de charge de référence représentatifs des efforts de coupe.

De préférence, un dispositif selon l'invention comprend des moyens de vérification du frottement desdits listels comprenant :
- des moyens de comparaison de ladite au moins une valeur de charge représentative de la trainée des listels à une valeur seuil prédéterminée ;
- des moyens de détection d'un frottement anormal desdits listels lorsque ladite au moins une valeur de charge représentative de la trainée des listels devient supérieure à ladite valeur seuil prédéterminée.

De préférence, un dispositif selon l'invention comprend des moyens de commande d'un débourrage lorsqu'il est détecté que le frottement des listels est anormal.

De préférence, lesdits paramètres de coupe prédéterminés sont des paramètres de coupe matière prédéterminés spécifiques à la matière en cours de perçage et au type de foret mis en œuvre pour réaliser l'opération de perçage en cours, un dispositif selon l'invention comprenant en outre des moyens de vérification des efforts de coupe comprenant des moyens de comparaison de ladite au moins une valeur de charge représentative des efforts de coupe à un intervalle étalon de valeurs de charge de coupe matière prédéterminé spécifique à la matière en cours de perçage pour un foret dont les arêtes de coupe présentent la qualité minimale requise pour un perçage correct et pour lesdits paramètres de coupe matière prédéterminés.

De préférence, un dispositif selon l'invention comprend des moyens de détection d'efforts de coupe anomaux lorsque ladite au moins une valeur de charge représentative des efforts de coupe n'est pas comprise dans ledit intervalle étalon de valeurs de charge de coupe matière.

De préférence, un dispositif selon l'invention comprend des moyens d'identification de la matière en cours de perçage, lesdits moyens d'identification comprenant :
- des moyens d'activation ou de maintien des paramètres de coupe de référence spécifiques au groupe de matières auquel appartient la matière en cours de perçage et au type de foret mis en œuvre pour réaliser l'opération de perçage en cours ;
- des moyens de détermination de la matière en cours de perçage, ladite matière en cours de perçage étant celle dont l'intervalle de valeur de charges de référence représentatives des efforts de coupe contient ladite au moins une valeur de charge représentative des efforts de coupe ;
- des moyens d'activation de paramètres de coupe matière prédéterminés spécifiques à la matière identifiée à ladite étape de détermination et au type de foret mis en œuvre ;
- des moyens de détermination d'au moins une valeur de charge représentative des efforts de coupe avec lesdits paramètres de coupe matière ;
- des moyens de validation de la matière identifiée au cours de ladite étape de détermination, ladite détermination de la matière étant validée lorsque l'au moins une valeur de charge représentative des efforts de coupe, déterminée en mettant en œuvre lesdits paramètres de coupe matière, appartient à un intervalle de valeurs de charge représentatives des efforts de coupe prédéterminé avec lesdits paramètres de coupe matière pour la matière identifiée.

De préférence, un dispositif selon l'invention comprend des moyens d'arrêt de ladite opération de perçage lorsqu'il est détecté que les efforts de coupe sont anormaux ou qu'aucune matière n'est identifiée.

Selon une variante possible, un dispositif selon l'invention comprend des moyens d'émission d'un signal d'alerte lorsqu'il est détecté que le frottement des listels est anormal et/ou lorsqu'il est détecté que les efforts de coupe sont anormaux et/ou qu'aucune matière n'est identifiée.

### 5. Liste des figures, tableaux et annexe

D'autres caractéristiques et avantages de l'invention apparaîtront à la lecture de la description suivante de modes de réalisation particuliers, donnée à titre de simple exemple illustratif et non limitatif, et des dessins annexés parmi lesquels :

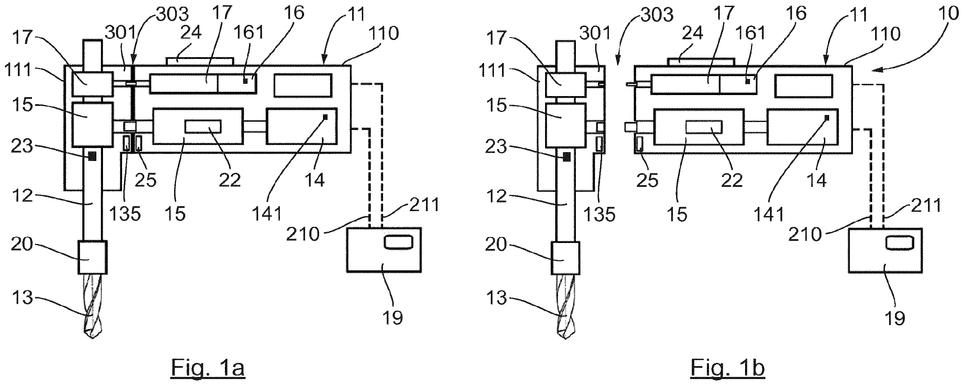

- les figures 1a et 1b illustrent un dispositif de perçage selon l'invention à tête détachable ;
- la figure 2 illustre un contrôleur d'un dispositif de perçage selon l'invention ;
- la figure 3 illustre l'extrémité d'un foret ;

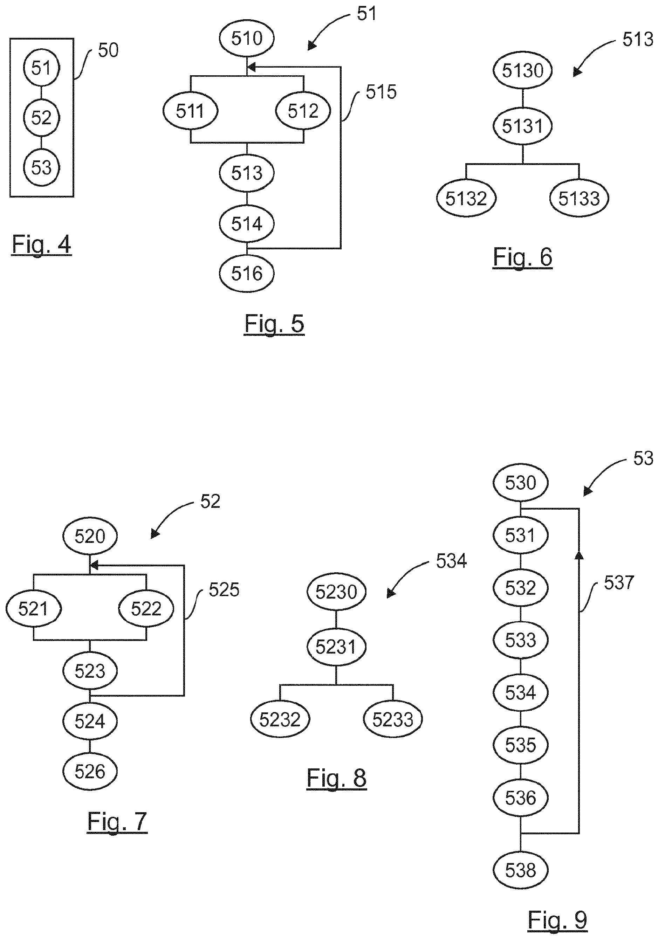

- les figures 4 à 9 illustrent des logigrammes d'évaluation en laboratoire d'une tête de perçage ;

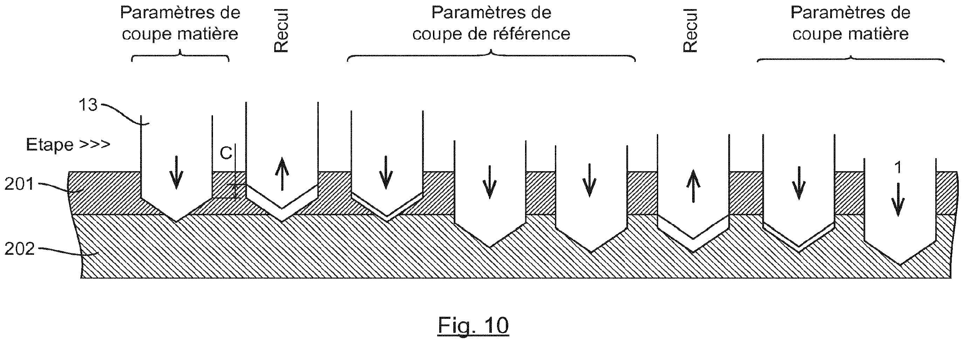

- la figure 10 illustre le déplacement d'un foret dans une pièce à percer comprenant deux couches de matières 201, 202 au cours d'un procédé selon l'invention.

Les tableaux 1 à 9 illustrent des tableaux de données prises en considération lors de la mise en œuvre d'un exemple de procédé selon l'invention.

L'annexe illustre un logigramme d'un exemple procédé de perçage selon l'invention.

### 6. Description de modes de réalisation particuliers

### 6.1. Dispositif

Un dispositif de perçage ou perceuse pour la mise en œuvre d'un procédé selon l'invention comprend une perceuse ou un robot de perçage à paramètres de coupe contrôlés. Un tel dispositif de perçage est connu en soit de l'homme du métier et n'est pas décrit en détail ici hormis les éléments plus spécifiques à l'invention.

Ainsi que cela est représenté sur les figures la et 1b, un tel dispositif de perçage 10 comprend un carter 11.

Le carter 11 comprend une première portion de carter 110 et une deuxième portion de carter 111 qui s'étendent sensiblement perpendiculairement l'une à l'autre. Dans une variante, le carter pourrait s'étendre le long d'un unique axe et ainsi ne pas présenter une forme essentiellement en T.

La perceuse comprend un arbre de sortie 12, ou broche, mobile en rotation et en translation selon un même axe. Cet arbre de sortie 12 est relié au moyen d'une ou plusieurs chaines de transmission à des moyens moteurs.

Dans ce mode de réalisation, les moyens moteurs comprennent :
- un moteur électrique d'entrainement en rotation 14 lié à l'arbre de sortie 12 par une chaine de transmission 15 permettant d'entrainer en rotation l'arbre de sortie 12, et donc le foret 13 qui y est solidarisé, et
- un moteur électrique d'avance 16, lié à l'arbre de sortie 12 par une chaine de transmission 17 permettant d'entrainer en translation l'arbre de sortie 12, et donc le foret qui y est solidarisé.

L'entrainement en rotation et l'entrainement en avance se font selon un même axe. Un tel principe est notamment décrit dans le document FR3000693.

Le dispositif de perçage comprend une tête de perceuse amovible 301. Celle-ci correspond à la deuxième portion de carter 111. Des moyens de liaison mécanique et électrique réversibles 303 seront classiquement mis en œuvre entre la tête de perceuse amovible 301 et la première portion de carter 110 (c'est-à-dire le corps de la perceuse).

Cette tête comprend une mémoire 135 comme par exemple une puce RFID au tout autre moyen de stockage de données approprié. La première portion de carter 110 comprendra donc un lecteur 25 apte à lire les informations contenues dans la mémoire associée à la tête de perceuse 301.

La charge sur le foret dans l'air d'un dispositif de perçage résulte essentiellement des frottements qui ont lieu à l'intérieur de la tête de perceuse amovible et du reste du carter.

La tête comprend des moyens de solidarisation 20 d'un outil coupant 13, par exemple un foret, placés à l'extrémité de l'arbre de sortie 12. Ces moyens de solidarisation peuvent par exemple comprendre une pince de foret. Bien évidemment, ces moyens de solidarisation peuvent permettre de solidariser à la perceuse une pluralité de forets différents.

Durant la vie du foret les informations relatives au foret sont portées par la mémoire intégrée dans la tête.

Dans une variante, il pourrait être envisagée que la mémoire soit intégrée directement dans le foret.

Dans ces deux variantes, on dira que la mémoire est associée au foret qu'elle soit intégrée à son porte outil ou directement dans le foret.

Une alternative à une étiquette RFID pourrait être une mémoire électronique connectée au contrôleur de la perceuse par des connecteurs électriques.

La perceuse est reliée à un contrôleur 19 par un câble qui comprend classiquement des fils d'alimentation de puissance 210 des moteurs et éventuellement des fils de communication 211. Il pourra éventuellement également comprendre des tubes de passage de fluide(s) comme du lubrifiant.

Selon l'exemple de réalisation illustré à la figure 2, le contrôleur 19 comprend une mémoire vive 180 (par exemple une mémoire RAM), une unité de traitement 181 équipée par exemple d'un processeur, et pilotée par un programme d'ordinateur, comprenant des instructions de code de programme pour l'exécution d'un procédé de perçage selon l'invention, ce programme étant stocké dans une mémoire morte 182 (par exemple une mémoire ROM). Le contrôleur comprend également un module d'émission/réception 183 filaire ou sans fil lui permettant de communiquer avec la perceuse et éventuellement avec d'autres équipements tel qu'un réseau informatique, ce module d'émission/réception incluant :
- un récepteur pour recevoir des signaux délivrés par les différents moyens de mesure (capteur) intégrés à la perceuse ;
- un émetteur pour émettre des commandes vers la perceuse.

La perceuse comprend également un module d'émission/réception (non représenté) pour communiquer avec le contrôleur.

Le contrôleur comprend également une interface d'entrée-sortie 193, une interface utilisateur pour gérer un moyen d'introduction de commande 194 (clavier, écran tactile, souris, ...), un moyen d'affichage 195 (écran, afficheur, voyant lumineux) et éventuellement, un moyen d'émission d'un signal sonore sur une fréquence audible 196.

L'interface entrée-sortie peut permettre la programmation de stratégies de perçage. La perceuse peut par elle-même intégrer une interface homme machine 24 permettant le démarrage du perçage et la visualisation d'informations relatives au déroulement du perçage.

Ce contrôleur 19 comprend deux alimentations de puissance 191, 192 permettant d'alimenter le moteur d'entrainement en rotation 14 du foret et le moteur d'avance 16. Ces alimentations peuvent par exemple être des onduleurs convenant à l'alimentation de moteurs synchrones à aimants permanents. Ces moteurs sont munis d'un capteur d'angle 141, 161 dont le signal, représentatif de l'angle du rotor par rapport au stator, est utilisé par les onduleurs pour alimenter correctement les moteurs synchrones.

Le contrôleur 19 comprend un connecteur de raccordement 196 à une source d'alimentation en courant électrique. Le contrôleur est dissocié de la perceuse. Dans une variante, il pourrait y être intégré, c'est-à-dire être logé à l'intérieur du carter de la perceuse.

A l'initialisation, les instructions de code du programme d'ordinateur sont par exemple chargées dans la mémoire vive 180 avant d'être exécutées par le processeur de l'unité de traitement 181. La mémoire vive 180 contient notamment les formules adéquates de calcul des différentes grandeurs déterminées au cours de la mise en œuvre di procédé. Le processeur de l'unité de traitement 181 réalise les différents calculs nécessaires. Il peut ensuite par exemple afficher le résultat, l'enregistrer, le transmettre à un réseau, le comparer à une ou plusieurs valeurs de seuil prédéterminées et piloter le cas échéant le dispositif de vissage en conséquence, émettre une alarme visuel et/ou sonore en cas de nécessite...

La figure 2 illustre seulement une manière particulière, parmi plusieurs possibles, de réaliser un contrôleur, afin qu'il effectue les étapes du procédé de perçage selon l'invention (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le contrôleur est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Le dispositif comprend des moyens de mesure d'au moins une information représentative de la charge sur le foret au cours d'un perçage.

Cette ou ces informations comprennent l'une ou la combinaison de plusieurs informations parmi le groupe suivant :
- couple appliqué sur le foret selon son axe de rotation ;
- force de poussée axiale appliquée sur ledit foret ;
- courant ou puissance électrique consommé par au moins un des moteurs dudit dispositif de perçage, ledit dispositif de perçage comprenant un moteur d'entrainement en rotation du foret et un moteur d'entrainement en translation dudit foret.

Les moyens de mesure d'au moins une information représentative de la charge sur le foret au cours d'un perçage comprennent donc l'un ou la combinaison de plusieurs des moyens suivants :
- un capteur de couple 22 appliqué au foret selon son axe de rotation ;
- un capteur de poussée 23 axiale apte à mesurer l'effort appliqué au foret le long de son axe de rotation ;
- un capteur de courant ou de puissance électrique 1910 consommée par au moins l'un des moteurs.

Ceux-ci sont connectés au contrôleur 19 pour en traiter les signaux.

Le dispositif comprend des moyens de détermination d'au moins une valeur de charge représentatives de la trainée globale due aux frottements internes dudit dispositif de perçage et au frottement desdits listels dans ledit élément à percer, ces moyes de détermination comprenant :
- des moyens d'arrêt de l'opération de perçage en cours ;
- des moyens de recul partiel dudit outil de coupe sur une distance prédéterminée, ladite distance prédéterminée étant choisie de telle sorte que lesdites arêtes de coupe ne soient plus en contact avec ledit élément à percer ;
- des moyens d'entrainement dudit outil de coupe avec des paramètres de coupe prédéterminés;
- des moyens de mesure d'au moins une valeur de charge pendant l'entrainement dudit outil de coupe avec lesdits paramètres de coupe avant que ses arêtes de coupe n'entrent de nouveau en contact avec ledit élément à percer, et après stabilisation desdites valeurs de charge, ladite au moins une valeur de charge mesurée étant représentative de ladite trainée globale.

Le dispositif comprend des moyens de détermination d'au moins une valeur de charge représentative de la trainée des listels due au frottement desdits listels dans ledit élément à percer, ces moyens comprenant :
- des moyens de détermination d'au moins une valeur de charge représentatives de la trainée dudit dispositif de perçage due aux frottements internes dudit dispositif de perçage fonctionnant avec lesdits paramètres de coupe prédéterminés ;
- des moyens de soustraction, à ladite au moins une valeur de charge représentatives de la trainée globale, de ladite au moins une valeur de charge représentatives de la trainée dudit dispositif de perçage, le résultat de ladite soustraction étant égal à ladite au moins une valeur de charge représentative de la trainée des listels.

Le dispositif de perçage comprend des moyens de détermination d'au moins une valeur de charge représentative des efforts de coupe générés par l'enlèvement de matière dudit élément à percer au cours d'une opération de perçage, ces moyens comprenant :
- des moyens de mesure d'au moins une valeur de charge au cours du perçage dudit élément à percer avec lesdits paramètres de coupe prédéterminés ;
- des moyens de soustraction, à ladite au moins une valeur de charge mesurée au cours du perçage dudit élément à percer, de ladite au moins une valeur de charge représentative de ladite trainée globale, le résultat de ladite soustraction étant égal à ladite au moins une valeur de charge représentative des efforts de coupe.

Le dispositif comprend des moyens d'activation de paramètres de coupe de référence prédéterminés spécifiques au groupe de matières auquel appartient la matière en cours de perçage et au type de foret mis en œuvre pour réaliser l'opération de perçage en cours, et des moyens de comparaison de ladite au moins une valeur de charge représentative des efforts de coupe avec des intervalles prédéterminés de valeur de charge de référence représentatifs des efforts de coupe, chacun desdits intervalles étant spécifique à une des matières dudit groupe.

Le dispositif comprend des moyens d'arrêt de l'opération de perçage en cours et/ou d'émission d'un signal d'alerte lorsque ladite au moins une valeur de charge représentative des efforts de coupe n'appartient à aucun desdits intervalles de valeur de charge de référence représentatifs des efforts de coupe.

Le dispositif de perçage comprend des moyens de vérification du frottement desdits listels comprenant :
- des moyens de comparaison de ladite au moins une valeur de charge représentative de la trainée des listels à une valeur seuil prédéterminée ;
- des moyens de détection d'un frottement anormal desdits listels lorsque ladite au moins une valeur de charge représentative de la trainée des listels devient supérieure à ladite valeur seuil prédéterminée.

Le contrôleur est programmé pour actionner un débourrage lorsqu'il est détecté que le frottement des listels est anormal.

Un débourrage consiste, au cours d'une opération de perçage, à faire reculer le foret en maintenant son entrainement en rotation, puis à l'entrainer de nouveau dans le sens du perçage. Ceci d'évacuer les copeaux du trou en cours de perçage.

Le dispositif de perçage comprend des moyens de vérification des efforts de coupe comprenant des moyens de comparaison de ladite au moins une valeur de charge représentative des efforts de coupe à un intervalle étalon de valeurs de charge de coupe matière prédéterminé spécifique à la matière en cours de perçage pour un foret dont les arêtes de coupe présente la qualité minimale requise pour un perçage correct et pour lesdits paramètres de coupe matière prédéterminés.

Le dispositif de perçage comprend des moyens de détection d'efforts de coupe anomaux lorsque ladite au moins une valeur de charge représentative des efforts de coupe n'est pas comprise dans ledit intervalle étalon de valeurs de charge de coupe matière.

Le dispositif de perçage comprend des moyens d'identification de la matière en cours de perçage, lesdits moyens d'identification comprenant :
- des moyens d'activation ou de maintien de paramètres de coupe de référence prédéterminés spécifiques au groupe de matières auquel appartient la matière en cours de perçage et au type de foret mis en œuvre pour réaliser l'opération de perçage en cours ;
- des moyens de détermination de la matière en cours de perçage, ladite matière en cours de perçage étant celle dont l'intervalle de valeur de charges de référence représentatives des efforts de coupe contient ladite au moins une valeur de charge représentative des efforts de coupe ;
- des moyens d'activation de paramètres de coupe matière prédéterminés spécifiques à la matière identifiée à ladite étape de détermination et au type de foret mis en œuvre ;
- des moyens de détermination d'au moins une valeur de charge représentative des efforts de coupe avec lesdits paramètres de coupe matière ;
- des moyens de validation de la matière identifiée au cours de ladite étape de détermination, ladite détermination de la matière étant validée lorsque l'au moins une valeur de charge représentative des efforts de coupe, déterminée en mettant en œuvre lesdits paramètres de coupe matière, appartient à un intervalle de valeurs de charge représentatives des efforts de coupe prédéterminé avec lesdits paramètres de coupe matière pour la matière identifiée.

Le contrôleur est programmé pour arrêter l'opération de perçage lorsqu'il est détecté que les efforts de coupe sont anormaux ou qu'aucune matière n'est identifiée.

Le contrôleur est programmé pour générer l'émission d'un signal d'alerte lorsqu'il est détecté que le frottement des listels est anormal et/ou lorsqu'il est détecté que les efforts de coupe sont anormaux et/ou qu'aucune matière n'est identifiée.

Les différents moyens de mesure et de détermination comprennent notamment le contrôleur et les capteurs nécessaires.

### 6.2. Procédé

### 6.2.0. Introduction

Selon le mode préférentiel de mise en œuvre de l'invention, un foret est associé durant sa vie à une tête amovible de perceuse, cette tête portant une mémoire contenant les informations relatives au foret. Le système de perçage comprend alors une perceuse à tête détachable et une tête de perceuse amovible.

Selon une variante, le système de perçage pourra comprendre une perceuse à tête intégrée dotée d'une mémoire. Dans ce cas, le foret est associé à la mémoire du système de perçage.

Un dispositif selon l'invention peut en outre être mis en œuvre pour réaliser le perçage d'éléments composés d'empilement de couches successives de matériaux différents, chaque empilement constituant un groupe de matières.

Plusieurs types de forets peuvent être utilisés en production, avec plusieurs types de dispositifs de perçage et plusieurs matériaux différents formant un ou plusieurs groupes de matières peuvent être percés en production.

Préalablement à la mise en œuvre d'un procédé de perçage selon l'invention, une évaluation préalable des matériels de perçage (systèmes de perçage (perceuse à tête détachable ou intégré, le cas échéant tête de perceuse amovible) et aux outils de coupe) puis une préparation des matériels de perçage avant envoi en production sont mises en œuvre.

L'évaluation préalable est réalisée dans des conditions de laboratoires, c'est-à-dire hors production. Elle à pour objectif de déterminer des valeurs étalons ou intervalles de valeurs étalons propres aux types de matériels de perçage susceptibles d'être utilisés en production.

Ces valeurs (ou intervalles de valeurs) étalons sont représentatives des efforts ou charges que ce matériel va subir ou générer dans des conditions nominales de perçage. Elles sont évaluées en laboratoire une fois pour chaque type de matériel donné dans un état nominal d'usage. Ces valeurs sont supposées être représentatives de tous les matériels du même type dans le même état nominal utilisés en production. Elles servent ensuite de valeurs étalons pour le pilotage du perçage en production.

Les données recueillies au cours de cette évaluation en laboratoire sont ensuite utilisées, par le département outillage d'une unité de production, lors de la préparation des matériels de perçage avant leur envoi en production. Le département outillage, qui assure classiquement la gestion du parc de matériel de perçage au sein de l'unité de production, enregistre alors dans les mémoires des matériels de perçage les valeurs et intervalles de valeurs étalons nécessaires à la réalisation d'opérations de perçage.

### 6.2.1. Evaluation préalable en laboratoire

Dans le cas d'un système de perçage à tête de perçage amovible, l'évaluation préalable en laboratoire porte d'une part sur chaque type de perceuse à tête amovible et d'autre part sur le couple formé par un type foret associé à un type tête amovible.

Cette évaluation porte sur différents types de perceuses à tête détachable et sur différents types de forets associés à leur tête de perceuse qui peuvent appartenir à différents types.

Un type de foret est notamment caractérisé par sa forme, sa matière, son revêtement, son diamètre...

Un type de tête de perceuse amovible est notamment caractérisé par sa transmission, ses dimensions, son rendement...

Un type de perceuse à tête amovible ou intégrée est notamment caractérisé par sa transmission, ses dimensions, son rendement...

Dans le cas d'un système de perçage à perceuse à tête intégrée, l'évaluation préalable en laboratoire porte sur la perceuse munie d'un foret.

L'évaluation en laboratoire a notamment pour but d'évaluer les valeurs « étalons » suivantes :
- valeurs de charge de référence représentatives des efforts de coupe propres à l'usage de paramètres de coupe de référence pour un foret donné et au moins une matière donnée, et des intervalles étalon de tolérance associés ;
- valeurs de charge représentatifs des efforts de coupe matière propres à l'usage de paramètres de coupe matière pour un foret donné et au moins une matière donnée, et des intervalles étalon de tolérance associés ;
- valeurs de charge étalon maximale représentatives de la trainée des listels propres à l'usage de paramètres de coupe de référence pour un foret et une matière contraignante donnée ;

- valeurs de charge représentatives de la trainée du système de perçage :
- perceuse à tête intégrée, ou
- perceuse à tête détachable et tête de perceuse amovible.

Les paramètres de coupe comprennent l'un ou la combinaison de plusieurs paramètres parmi les suivants :
- vitesse de coupe ;
- vitesse d'avance ;
- fréquence de rotation ;
- type et niveau de lubrification ;
- aspiration des copeaux ;
- amplitude et fréquence de la composante de perçage vibratoire.

Ces mesures sont réalisées avec des forets d'une part à l'état neuf et d'autre part avec des forets usagés. Un foret est considéré usagé lorsqu'il a effectué environ 80% des trous qu'il est capable de faire avec un niveau de précision satisfaisant.

Les perceuses utilisées sont dans un état « rodé », c'est-à-dire ayant atteint un niveau d'usage correspondant à environ 10% de leur durée de vie.

Les matières sont les mêmes que celles utilisées dans la construction des structures qui devront être percées en production.

### i. Evaluation du système de perçage

### i.1. Valeurs de charges représentatives de la trainée du système de perçage

Une étape préalable d'évaluation en laboratoire d'un système de perçage comprend la détermination pour chaque type de système de perçage de valeurs de charges représentatives de la trainée du système de perçage :
- trainée de la perceuse à tête intégrée, ou
- trainée de la perceuse à tête détachable et trainée de tête de perceuse amovible.

Une étape préalable d'évaluation en laboratoire d'au moins une valeur de charges représentatives de la trainée du système de perçage due aux frottements internes à celui-ci (transmission et moteur) est mise en œuvre pour chaque type de système de perçage.

Un type de système de perçage est défini par :
- sa conception y compris sa lubrification ;
   - ratio de transmission ;
   - caractéristiques des organes de transmission ;
   - inertie des composants ;
- son état d'usage.

Le système de perçage peut être du type à tête détachable : il comprend alors une perceuse et une tête de perceuse amovible.

Le système de perçage peut être du type à tête intégrée : la perceuse et sa tête forment un ensemble monobloc.

Dans le cas d'une perceuse à tête détachable, la perceuse à tête détachable (i.e. le corps de la perceuse) sera préférentiellement testée seule de manière à déterminer au moins une information représentative de la trainée de la perceuse sans tête amovible. Les têtes de perceuses amovibles seront testées sur une perceuse sans tête amovible déjà testée, de manière à déterminer au moins une information représentative de la trainée de la tête amovible. Lors d'une opération de perçage réalisée avec une perceuse associée à une tête amovible, l'au moins une valeur de charge représentative de la trainée de la perceuse sera alors égale à la somme de l'au moins une valeur de charge représentative de la perceuse sans tête amovible et de l'au moins une valeur de charge représentative de la tête amovible.

Dans une autre variante, l'au moins une valeur de charge représentative de la trainée pourra ne pas être prise en compte si elle est négligeable, c'est-à-dire inférieure à 5 % de l'au moins une valeur de charge mesurée pendant un perçage en pleine matière.

Différentes stratégies d'évaluation des valeurs de charge représentatives de la trainée du système de perçage sont envisagées, ceci pour un type de perceuse, un type de tête et des paramètres de coupe donnés (ici ce sont les paramètres de référence qui sont utilisés). Ces stratégies sont appliquées en laboratoire pour l'évaluation de valeurs « étalons ». Ces stratégies sont classées de la plus simple vers la plus complexe.

Ces différentes stratégies sont mises en œuvre en appliquant des paramètres de coupe de référence.

### i.1.1. Stratégie 1

Au moins une valeur de charge est mesurée sans charge sur le foret, ni axiale ni de couple, pour une longueur de broche sortie donnée, et est enregistrée comme valeur de charge représentative de la trainée du dispositif de perçage.

Dans ce cas, la mesure d'au moins une valeur de charge est réalisée en faisant tourner la perceuse à vide en appliquant les paramètres de coupe de référence correspondant au type de foret et au groupe de matières considérés.

### i.1.2. Stratégie 2

La trainée du dispositif de perçage peut varier en fonction de la longueur de sortie de la broche de la perceuse.

Au moins une valeur de charge est mesurée pour plusieurs longueurs de sortie de broche, sans charge sur le foret, ni axiale ni de couple et enregistrée en tant valeur de charge représentative de la trainée du système de perçage. Des courbes indiquant la relation entre l'au moins une valeur de charge représentative de la trainée du système de perçage et la longueur de sortie de broche sont établies.

Dans ce cas, on enregistre l'évolution, en fonction de la longueur de sortie de la broche du corps de la perceuse, au moins une valeurs de charges représentatives de la trainée de la perceuse en faisant tourner la perceuse à vide selon les paramètres de références.

### i.1.3. Stratégie 3

La stratégie 3 est identique à la stratégie 2 mais avec une charge calibrée appliquée sur le foret (couple et force axiale) représentative d'une trainée moyenne des listels du foret sur les parois d'un trou.

Dans ce cas, l'enregistrement d'au moins une valeurs de charges représentatives de la trainée de la perceuse est mesurée non plus en faisant tourner la perceuse à vide mais en la faisant tourner en soumettant la broche à une charge calibrée dont la valeur est préférentiellement de l'ordre de celle de la charge de trainée de la perceuse. Cette variante permet de garantir que la mesure d'au moins une valeur de charge représentatives de la trainée de la perceuse est réalisée alors que les composants internes à la perceuse supposés être en contact en fonctionnent normal le sont effectivement (par exemple les pignons de la transmission...).

Cette stratégie permet d'améliorer la précision.

### i.1.4. Stratégie 4

D'autres paramètres peuvent influer sur la trainée du système de perçage tels que la température de la perceuse ou le nombre de cycles de perçage réalisés par le système de perçage.

La stratégie 4 est identique à la stratégie 3 mais avec des coefficients pondérant l'influence de la température du système de perçage et/ou de son usure en fonction du nombre de cycles de perçage réalisés.

Dans ce cas, on pourra enregistrer l'évolution d'au moins une valeurs de charge représentative de la trainée du dispositif de perçage, en fonction de la longueur de sortie de la broche du corps de la perceuse, et/ou de la température de la perceuse et/ou du nombre de cycles de perçage de la perceuse, en faisant tourner la perceuse à vide ou en soumettant sa broche à une charge calibrée.

### i.1.5. Alternative

De manière alternative à ces stratégies 1 à 4, l'au moins une valeur de charge représentative de la trainée du système de perçage pourra être mesurée en début de perçage durant la phase d'approche du foret dans l'air d'approche. Cette alternative sera décrite plus loin dans le paragraphe dévolu à l'application du procédé en production.

### ii. Evaluation des forets associés chacun à une tête amovible

Une étape préalable d'évaluation en laboratoire 50 des forets comprend la détermination pour chaque type de foret :
- de valeurs de charges de référence représentatives des efforts de coupe sur les arêtes de coupe du foret pour chaque matière percée par un foret donné avec des paramètres de coupe de référence prédéterminés et des intervalles de tolérance étalons correspondants (étape 51) ;
- de valeurs de charges représentatives des efforts de coupe matière sur les arêtes de coupe du foret pour chaque matière percée par un foret donné avec des paramètres de coupe matière prédéterminés et des intervalles de tolérances étalons correspondants (étape 52) ;
- de valeurs de charges étalon maximales représentatives de la trainée des listels pour la matière contraignante de chaque groupe de matières percée avec un foret donné (étape 53).

### ii.1. Valeurs de charges de référence représentatives des efforts de coupe

Une étape 51 préalable d'évaluation en laboratoire de valeurs de charges de référence représentative des efforts de coupe est réalisée pour chaque type de foret et chacune des matières pour chacun des groupes de matières donnés qui pourront être amenés à être percés, y compris l'air.

L'air est considéré comme une matière à percer dans la mesure où avant d'entrer dans un élément à percer, le foret se situe dans l'air ambiant dénommé air d'approche. Après être sorti de l'élément à percer, le foret se situe dans l'air ambiant dénommé air de sortie.

Cette étape 51 comprend :
- la détermination 510 de paramètres de coupe de référence pour ledit type de foret en fonction des matières dudit groupe de matières : ces paramètres de référence sont les paramètres de coupe contraignants pour un groupe de matières donné, i.e. ce sont les paramètres de coupe basés sur les valeurs de vitesse de coupe et d'avance du, ou des, matériaux imposants des valeurs limites minimum ou maximum, en dessous ou, au-dessus desquelles un inconvénient majeur apparait, tel que l'usure prématurée des arêtes de coupe du foret. Ils sont propres à un type de foret et à un groupe de matières ;
- le perçage 511 de chacune des matières avec un foret dudit type en mettant en œuvre les paramètres de coupe de référence correspondants audit foret et audit groupe de matières ;
- la mesure 512 au cours de ces perçages d'au moins une valeur de charge brute sur ledit foret ;
- la détermination 513 d'au moins une valeur de charges représentative d'une trainée globale comprenant au cours de chacun de ces perçages :
   - l'arrêt 5130 dudit perçage en cours ;
   - le recul 5131 partiel de l'outil de coupe sur une distance prédéterminée, ladite distance prédéterminée étant choisie de telle sorte que lesdites arêtes de coupe ne soient plus en contact avec ledit élément à percer ;
   - l'entrainement 5132 de l'outil de coupe avec les paramètres de coupe de référence correspondants audit foret et à ladite matière ;
   - la mesure 5133 d'au moins une valeur de charge pendant l'entrainement de l'outil de coupe avant que ses arêtes de coupe n'entrent de nouveau en contact avec l'élément à percer et après stabilisation de l'au moins une valeur de charge mesurée, l'au moins une valeur de charge mesurée étant représentative de ladite trainée globale ;
- la soustraction 514, à chaque valeur de charge brute sur ledit foret, de la valeur de charge représentative de la trainée globale, le résultat obtenu correspondant à des valeurs de charges de référence représentatives des efforts de coupe de la matière considérée ;
- la répétition 515 des étapes 511 à 514 un nombre de fois égal avec des forets neufs et usagés ;
- la définition 516 avec lesdits résultats obtenus d'un intervalle de tolérance étalon pour ou moins une valeur de charge de référence représentative des efforts de coupe de chaque matière : cet intervalle est défini de manière à couvrir les variations de charge matière dues aux variations des caractéristiques de la matière, du foret, de la tête et des aux phénomènes vibratoires et aux légères variations de vitesses des moteurs. L'utilisation de foret neufs et de forets usagés permet de prendre en compte efficacement la variabilité des valeurs de charge découlant d'une usure plus ou moins forte des arêtes de coupe et ainsi de déterminer des intervalles étalons significatifs.

### ii.2. Valeurs de charges représentatives des efforts de coupe matières

Une étape 52 préalable d'évaluation en laboratoire de valeurs de charges représentatives des efforts de coupe matière est mise en œuvre pour chaque type de foret et chacune des matières qui pourront être amenés à être percées, y inclus l'air d'approche et l'air de sortie. Elle comprend :
- la détermination 520 des paramètres de coupe pour ledit type de foret pour chaque matière : ceux-ci permettent de réaliser un perçage optimal pour chacune des matières avec le type de foret considéré ;
- le perçage 521 de chacune des matières avec un foret dudit type en mettent en œuvre les paramètres de coupe correspondants audit foret et à ladite matière ;
- la mesure 522 au cours de ces perçages d'au moins une valeur de charge brute sur ledit foret ;
- la détermination 523 d'au moins une valeur de charges représentative d'une trainée globale comprenant au cours de chacun de ces perçage :
   - l'arrêt 5230 dudit perçage en cours ;
   - le recul partiel 5231 de l'outil de coupe sur une distance prédéterminée, ladite distance prédéterminée étant choisie de telle sorte que lesdites arêtes de coupe ne soient plus en contact avec ledit élément à percer ;
   - l'entrainement 5232 de l'outil de coupe avec les paramètres de coupe correspondants audit foret et à ladite matière ;
   - la mesure 5433 d'au moins une valeur de charge pendant l'entrainement de l'outil de coupe avant que ses arêtes de coupe n'entrent de nouveau en contact avec l'élément à percer, l'au moins une valeur de charge mesurée étant représentative de ladite trainée globale ;
- la soustraction 524, à chaque valeur de charge brute sur ledit foret, de la valeur de charge de trainée globale, le résultat obtenu correspondant à des valeurs de charges représentatives des efforts de coupe de la matière considérée ;
- la répétition 525 des étapes 521 à 524 un nombre de fois égal avec des forets neufs et usagés ;
- la définition 526 avec lesdits résultats obtenus d'un intervalle de tolérance étalon pour ou moins une valeur de charge représentative des efforts de coupe de chaque matière : cet intervalle est défini de manière à couvrir les variations de charge matière dues aux variations des caractéristiques de la matière, du foret, de la tête et des aux phénomènes vibratoires et aux légères variations de vitesses des moteurs. L'utilisation de foret neufs et de forets usagés permet de prendre en compte efficacement la variabilité des valeurs de charge découlant d'une usure plus ou moins forte des arêtes de coupe et ainsi de déterminer des intervalles étalons significatifs.

### ii.3. Valeurs de charges étalon maximales représentatives de la trainée des listels

Une étape préalable 53 d'évaluation en laboratoire d'au moins une valeur de charge étalon maximale représentative de la trainée des listels est réalisée pour chaque type de foret et pour la matière la plus contraignante de chaque groupe de matières qui pourra être amené à être percé. Elle comprend :
- la détermination 530 de paramètres de coupe de référence pour ledit type de foret en fonction des matières dudit groupe de matières : ces paramètres de coupe de référence sont les paramètres de coupe contraignants pour un groupe de matières donné, i.e. ce sont les paramètres de coupe basés sur les valeurs de vitesse de coupe et d'avance du, ou des, matériaux imposants des valeurs limites minimum ou maximum, en dessous ou, au-dessus desquelles un inconvénient majeur apparait, tel que l'usure prématurée des arêtes de coupe du foret. Ils sont propres à un type de foret et à un groupe de matières ;
- le perçage 531 de la matière contraignante du groupe de matières considéré sur une profondeur prédéterminée (de l'ordre de 1 fois et demi le diamètre) avec un foret dudit type en mettant en œuvre les paramètres de coupe de la matière contraignante correspondants audit foret et audit groupe de matières considérés ;
- le recul partiel 532 du foret sur une distance prédéterminée, ladite distance prédéterminée étant choisie de telle sorte que lesdites arêtes de coupe ne soient plus en contact avec ledit élément à percer (environ 0,5 à 1 mm) ;
- l'application 533 des paramètres de coupe de référence au foret durant une « course d'avance hors coupe » ;
- la mesure 534 d'au moins une valeur de charge durant la « course d'avance hors coupe », après stabilisation en début de course et avant que les arêtes du foret ne soient susceptibles de replonger dans la matière du fait de l'amplitude de l'avance vibratoire en fin de course. Cette au moins une valeur de charge est représentative de la trainée globale (système de perçage et listels) ;
- l'obtention 535 d'au moins une valeur de charge représentative de la trainée du système de perçage (suivant l'une des stratégies précitées dans le cadre de la qualification du système de perçage ) ;
- le calcul 536 d'au moins une valeur de charge représentative de la trainée des listels, chaque valeur de charge représentative de la trainée des listels étant égale à une valeur de charge représentatives de la trainée globale moins une valeur de charge représentative de la trainée du système de perçage ;
- la répétition 537 au moins une fois des mêmes précédentes opérations avec d'autres forets du même type neufs et usagés ;
- calcul 538 de la moyenne desdites valeurs de charges représentative de la trainée des listels, augmentée d'un coefficient de 50 %, le résultat obtenu correspondant à une valeur de charge étalon maximale que la trainée des listels ne doit pas dépasser.

### iii. Données issues de l'évaluation en laboratoire

Les valeurs obtenues lors des évaluations précédentes en laboratoire sont enregistrées dans une banque de données pour permettre le paramétrage de système de perçage destinés à être utilisés en production sur des applications caractérisées par :
- un type de foret
- un groupe de matière à percer
- une tête de perceuse et un corps de perceuse dans le cas d'une perceuse à tête détachable, ou une perceuse à tête intégrée.

Les valeurs précédemment évaluées sont donc regroupées sous forme de tableaux nécessaires au paramétrage de chaque application.

Ainsi nous trouvons pour chaque application :
- un tableau du type de celui du tableau 1 listant les éléments caractérisant l'application ;
- un tableau du type de celui du tableau 2 regroupant paramètres de coupe de référence de l'application ;
- un tableau du type de celui du tableau 3 regroupant, pour chaque matière du groupe matières de l'application, les valeurs de charges de référence représentatives des efforts de coupe (charges de référence sous paramètres de coupe de référence), les paramètres de coupe matière, les valeurs de charges représentatives des efforts de coupe matière (charges de coupe sous paramètres de coupe matière) ;
et, dans le cas d'une perceuse à tête détachable :
- un tableau du type de celui du tableau 4 regroupant, pour chaque stratégie décrite dans le paragraphe dévolue à l'évaluation préalable en laboratoire, les valeurs de charges représentatives de la trainée de la tête de perceuse détachable (charges de référence sous paramètres de coupe de référence) ;
- un tableau du type de celui du tableau 5 regroupant, pour chaque stratégie décrite dans le paragraphe dévolue à l'évaluation préalable en laboratoire, les valeurs de charges représentatives de la trainée du corps de perceuse à tête détachable (charges de référence sous paramètres de coupe de référence) ;
ou dans le cas d'une perceuse à tête intégrée :
- un tableau du type de celui du tableau 6 regroupant, pour chaque stratégie décrite dans le paragraphe dévolue à l'évaluation préalable en laboratoire, les valeurs de charges représentatives de la trainée du corps de perceuse à tête intégrée (charges de référence sous paramètres de coupe de référence).

**Tableau 1**

| **Eléments constitutifs d'une application** | | |
|---|---|---|
| **Dispositif de perçage constitué par:** | **Type de foret** | **A** |
| | **Tête de perceuse** | **B** |
| | **Corps de perceuse à tête** | **C** |
| | **Perceuse à tête intégrée** | **/** |
| **Groupe de matières constitué par:** | | **Mat 1** |
| | | **Mat 2** |
| | | **Mat 3** |
| | | **Air d'approche** |
| | | **Air de chape** |
| | | **Air de sortie** |

**Tableau 2**

| **Paramètres de coupe de référence** | |
|---|---|
| | |
| | |
| **Course début de mesure** | |
| **Course fin de mesure** | |
| **Vitesse de rotation** | |
| **Avance par tour** | |
| **Lubrification** | |
| **Perçage vibratoire** | |
| | |
| | |

**Tableau 3**

| | **Paramètres relatifs au foret et enregistrés dans la mémoire intégrée dans la tête détachable ou à la perceuse à tête intérgée** | | | | | | | | | | | | | |
|---|---|---|---|---|---|---|---|---|---|---|---|---|---|---|
| | **Valeurs de charge de référence représentatives des effort de coupe** | | | | | | **Paramètres de coupe matière** | | | | **Valeurs de charge représentatives des efforts de coupe matière** | | | |
| | **Couple de coupe sur arrêtes de coupe** | | **Poussée de coupe sur arrêtes de coupe** | | **Couple detrainée de listel** | **Poussée de traînée de listel** | **Vitesse de rotation** | **Avance par tour** | **Lubrification** | **Perçage vibratoire** | **Couple de coupe sur arrêtes de coupe** | | **Poussée de coupe sur arrêtes de coupe** | |
| | **min** | **max** | **min** | **max** | **max** | **max** | | | | | **min** | **max** | **min** | **max** |
| **Mat 1** | | | | | | | | | | | | | | |
| **Mat 2** | | | | | | | | | | | | | | |
| **Mat 3** | | | | | | | | | | | | | | |
| **Air d'approche** | | | | | | | | | | | | | | |
| **Air de chape** | | | | | | | | | | | | | | |
| **Air de sortie** | | | | | | | | | | | | | | |

**Tableau 4**

| | **Paramètres relatifs à la tête de perceuse détachable et enregistrés dans sa mémoire** | |
|---|---|---|
| | **Valeurs de charges représentatives de la traînée de la tête de perceuse** | |
| | **Couple de trainée nominal** | **Poussée de traînée nominal** |
| **Startégie 1** | Ctnom (valeur fixe) | Ptnom (valeur fixe) |
| ou | | |
| **Startégie 2** | Couple = f (lg) | Poussée = g(lg) |
| ou | | |
| **Startégie 3** | Couple = h (lg) | Poussée = i (lg) |
| ou | | |
| **Startégie 4** | Couple = j (lg ; T°c ; nb cycles) | Poussée = k (lg ; T°c ; nb cycles) |
| lg = longueur de broche sortie | | |
| nb cycles = nombre de cycles de perçage réalisés par la perceuse et caractérisant son usure | | |

**Tableau 5**

| | **Paramètres relatifs au corps d'une perceuse à tête détachable enregistrés dans sa mémoire** | |
|---|---|---|
| | **Valeurs de charge représentatives de la trainée du coprs de perceuse à tête détachable** | |
| | **Couple de trainée nominal** | **Poussée de trainée nominal** |
| **Startégie 1** | Ccnom (valeur fixe) | Pcnom (valeur fixe) |
| ou | | |
| **Startégie 2** | Couple = l (lg) | Poussée = m (lg) |
| ou | | |
| **Startégie 3** | Couple = n (lg ) | Poussée = o (lg) |
| ou | | |
| **Startégie 4** | Couple = p (lg : T°c ; nb cycles) | Poussée = q (lg; T°c ; nb cycles) |

**Tableau 6**

| | **Paramètres relatifs à une perceuse à tête Intégrée enregistrés dans sa mémoire** | |
|---|---|---|
| | **Valeurs de charge représentatives de la traînée de la perceuse à tête intégrée** | |
| | **Couple de trainée nominal** | **Poussée de traînée nominal** |
| **Startégie 1** | Ccnom (valeur fixe) | Pcnom (valeur fixe) |
| ou | | |
| **Startégie 2** | Couple = l (lg) | Poussée = m (lg) |
| ou | | |
| **Startégie 3** | Couple = n (lg) | Poussée = o (lg) |
| ou | | |
| **Startégie 4** | Couple = p (lg; T°c : nb cycles) | Poussée = q ( lg ; T°c : nb cycles) |

### 6.2.2. Préparation du matériel pour mise en production

Les tableaux issus de l'évaluation en laboratoire sont mis à dispositions du département outillage de l'entreprise, sous la forme de fichiers numérique, pour lui permettre de procéder à la préparation des matériels de perçage avant leur mise en production.

Le département outillage est en charge du stockage et de la préparation des matériels de perçage (système de perçage et outil de coupe) pour leur usage en production.

Ainsi chaque fois que ce département outillage reçoit un composant de système de perçage neuf (perceuse à tête intégrée, corps de perceuse à tête détachable, tête de perceuse détachable), l'opérateur charge dans la mémoire du corps de perceuse ou dans la tête détachable ou dans la perceuse, les différentes applications envisagées où ce composant est susceptible d'être utilisé, ainsi que, pour chacune de ces applications, les fichiers numériques (ou tableaux de valeurs) correspondants.

La mémoire d'un corps de perceuse recevra donc les tableaux du type du tableau 5 des différentes applications où ce corps est susceptible d'être utilisé, ainsi qu'un tableau du type du tableau 8 listant les différentes applications où ce corps est susceptible d'être utilisé et pour chacune de ces applications le tableau 5 correspondant.

**Tableau 8**

| **Mémoire corps de perceuse** | |
|---|---|
| **Application** | **Tableau 15** |
| **1** | |
| **2** | |
| **3** | |
| **4** | |
| **5** | |

La mémoire d'une tête détachable recevra donc les tableaux du type des tableaux 2, 3 et 4 des différentes applications où cette tête est susceptible d'être utilisée, ainsi qu'un tableau du type du tableau 7 listant les différentes applications où cette tête détachable est susceptible d'être utilisé et pour chacune de ces applications les tableaux 2, 3 et 4 correspondants.

**Tableau 7**

| **Mémoire tête détachable** | | | |
|---|---|---|---|
| **Application** | **Tableau 12** | **Tableau 13** | **Tableau 14** |
| **1** | | | |
| **2** | | | |
| **3** | | | |
| **4** | | | |
| **5** | | | |

La mémoire d'une perceuse à tête intégrée recevra donc les tableaux du type des tableaux 2, 3 et 6 des différentes applications où cette perceuse est susceptible d'être utilisée, ainsi qu'un tableau du type du tableau 9 listant les différentes applications où cette perceuse à tête intégrée est susceptible d'être utilisée et pour chacune de ces applications les tableaux du type des tableaux 2, 3 et 6 correspondants.

**Tableau 9**

| **Mémoire perceuce tête intégrée** | | | |
|---|---|---|---|
| **Application** | **Tableau 12** | **Tableau 13** | **Tableau 16** |
| **1** | | | |
| **2** | | | |
| **3** | | | |
| **4** | | | |
| **5** | | | |

Dans une variante ces paramètres peuvent être stockés dans la mémoire de la perceuse.

Dans une autre variante ces paramètres peuvent être stockés sur un serveur de l'entreprise auquel aurait accès la perceuse par une communication radio.

De même lorsque le département laboratoire publie des fichiers de valeurs nécessaires à une nouvelle application ou un correctif des valeurs d'une application existante, l'opérateur du département outillage effectue une mise à jour des mémoires des composants des systèmes de perçage.

Lorsque l'opérateur du département outillage reçoit une demande préparation pour une application donnée, il sort de son magasin le corps de perceuse, la tête de perceuse (ou la perceuse à tête intégrée) et le foret nécessaires à l'application, assemble ces composants et met le système de perçage ainsi constitué à disposition du département production.

### 6.2.2. Application du procédé en production

Afin de réaliser une opération de perçage d'un élément comprenant un empilement d'une succession de couches de matières différentes formant un groupe de matières, le département production se procure auprès du département outillage le système de perçage adapté à son application..

Lors de l'utilisation du système de perçage, l'opérateur de production sélectionne, grâce à l'interface homme machine du système de perçage, l'application concernée. Le contrôleur du système de perçage va alors chercher dans les mémoires du corps de perceuse à tête détachable et de la tête de perceuse détachable (ou de la perceuse à tête intégrée) les valeurs des tableaux 2, 3, 4, 5, 6 correspondants à cette application.

L'opération de perçage est ensuite réalisée selon l'application sélectionnée préprogrammée dans le contrôleur 19.

Au cours de la mise en œuvre du procédé, c'est-à-dire durant toutes les phases de déplacement du foret dans une matière y inclus les airs d'approche et de sortie, une mesure est réalisée, préférentiellement en continu (en temps réel), d'au moins une valeur de charge brute sur le foret. Celle-ci peut consister à mesurer un ou plusieurs paramètres parmi le couple transmis au foret via le capteur 22, la poussée axiale transmis au foret via le capteur 23, la puissance ou le courant électrique consommé par l'un au moins des moteurs d'entrainement en rotation ou en translation via le capteur 1910. Une valeur de charge brute est donc celle délivrée par un capteur qui est ensuite utilisée pour déterminer des grandeurs physiques utilisées dans le cadre de la régulation du perçage.

Lors du déplacement du foret dans l'air d'approche avant que ses arêtes de coupe n'entre dans la pièce à percer, l'au moins une valeur de charge brute mesurée après stabilisation est en réalité représentative essentiellement des frottements internes du système de perçage puisque le frottement des listels dans l'air d'approche en négligeable.

Le foret 13 est entrainé en direction de la pièce à percer au cours d'une phase d'approche 71.

Au cours d'une étape 711 optionnelle, le foret est entrainé avec les paramètres de coupe de référence. L'au moins une valeur de charge brute mesurée en temps réelle, avant que les arêtes de coupe n'entre dans la pièce à percer, est représentative de la trainée du système de perçage. Cette valeur est enregistrée dans la mémoire du système (étape 712). La mise en œuvre de ces étapes 711 et 712 permet donc d'éviter la détermination en laboratoire d'au moins une valeur de charge représentative de la trainée du système de perçage selon l'une des stratégies 1 à 4 décrites précédemment dans le paragraphe dévolu à l'évaluation préalable en laboratoire, et son enregistrement par le département outillage dans la mémoire du système de perçage.

Au cours d'une étape 713, le foret est entrainé selon les paramètres de coupe de l'air d'approche prédéterminés et enregistrés dans sa mémoire. Ces paramètres de coupe peuvent par exemple comprendre une fréquence de rotation, une vitesse d'avance... (cf. tableau 3).

La mesure d'au moins une valeur de charge brute pendant le déplacement du foret dans l'air d'approche, avec les paramètres de coupe de l'air d'approche, avant que ses arêtes de coupe n'entrent dans la pièce à percer, constitue une étape de mesure d'au moins une valeur de charge représentative de la trainée du système de perçage fonctionnant avec les paramètres de coupe de l'air d'approche. Cette valeur est enregistrée dans la mémoire du système (étape 714).

La détermination d'au moins une valeur de charge représentative de la trainée du système de perçage avec les paramètres de coupe de l'air d'approche et la détermination d'au moins une valeur de charge représentative de la trainée du système de perçage avec les paramètres de coupe de référence peuvent être réunies en une seule étape :
- si la vitesse de rotation du foret lors de la phase d'approche est choisie comme celle des paramètres de coupe de référence, et
- si dans le déroulement du procédé, seule la valeur de charge prise en considération est celle relative au couple de coupe.

Le procédé comprend une étape 72 de détection de l'entrée du foret 13 dans l'élément à percer.

Dans ce mode de réalisation, cette étape comprend :
- la détermination 720 d'au moins une valeur de charge représentative des efforts de coupe dans l'air d'approche correspondant à la soustraction à l'au moins une valeur de charge brute mesurée en temps réel pendant le déplacement du foret dans l'air d'approche de l'au moins une valeur de charge représentative de la trainée du dispositif de perçage fonctionnant avec les paramètres de coupe de l'air d'approche déterminée à l'étape 714 ;
- la vérification 721 de la présence de l'au moins une valeur de charge représentative des efforts de coupe dans l'air d'approche à l'intérieur de l'intervalle étalon prédéterminé de valeurs de charge représentatives des efforts de coupe dans l'air d'approche correspondant au foret,
- la détection 722 de l'entrée du foret dans l'élément à percer lorsque l'au moins une valeur de charge représentative des efforts de coupe dans l'air d'approche ne se trouve plus à l'intérieur de l'intervalle étalon prédéterminé de valeurs de charge représentatives des efforts de coupe dans l'air d'approche ;
- la non détection 723 de l'entrée du foret dans l'élément à percer lorsque l'au moins une valeur de charge représentative des efforts de coupe dans l'air d'approche reste à l'intérieur de l'intervalle étalon prédéterminé de valeurs de charge représentatives des efforts de coupe dans l'air d'approche.

S'il est détecté que le foret n'est pas entré dans la pièce à percer, le procédé de perçage se poursuit jusqu'à ce qu'il soit détecté que le foret est entré dans la pièce à percer.

L'enchainement des sous étapes de l'étape 72 constitue une boucle de vérification répétée selon une fréquence de plusieurs kilohertz correspondant à la fréquence de calcul du contrôleur.

Lorsqu'il est détecté que le foret est entré dans la pièce à percer, ce qui est assimilable à un changement de matière (passage de l'air d'approche à la première couche de matière de l'élément à percer), une étape de vérification d'un changement réel de matière est mise en œuvre durant laquelle les paramètres de coupe de référence correspondant au type de foret utilisé et au groupe de matières en cours de perçage sont activés.

Cette étape comprend une étape 73 de vérification du frottement des listels comprenant :
- la mesure 730 d'au moins une valeur de charge représentative de la trainée globale due aux frottements du système de perçage et au frottement des listels;
- la détermination 731 d'au moins une valeur de charge représentative de la trainée du système de perçage ;
- la détermination 732 d'au moins une valeur de charge représentative de la trainée des listels ;
- la comparaison 733 de l'au moins une valeur de charge représentative de la trainée des listels avec la valeur de charge étalon maximale de trainée des listels prédéterminée correspondant au groupe matières et au type de foret considérés.

La mesure 730 d'au moins une valeur de charge représentative de la trainée globale comprend :
- l'arrêt 7300 de l'opération de perçage en cours ;
- le recul partiel 7301 de l'outil de coupe sur une distance prédéterminée, ladite distance prédéterminée étant choisie de telle sorte que lesdites arêtes de coupe ne soient plus en contact avec ledit élément à percer (par exemple comprise entre 0,5 et 1 millimètre) ;
- l'entrainement 7302 de l'outil de coupe avec les paramètres de coupe de référence prédéterminés correspondant au type de foret et au groupe de matières considérés ;
- la mesure 7303 d'au moins une valeur de charge brute pendant l'entrainement de l'outil de coupe avec les paramètres de coupe de référence avant que ses arêtes de coupe n'entrent de nouveau en contact avec l'élément à percer, c'est-à-dire pendant une course d'avance hors coupe, l'au moins une valeur de charge brute mesurée étant représentative de la trainée globale. Cette mesure est réalisée après stabilisation des valeurs de charge en début de déplacement du foret. Cette stabilisation est nécessaire car les valeurs de charge au redémarrage sont sujettes à des fluctuations dues aux effets dynamiques occasionnés par ce redémarrage. Cette stabilisation est obtenue à l'issue d'une course du foret de l'ordre de 0,2 millimètres.

La détermination 731 d'au moins une valeur de charge représentative de la trainée du système de perçage consiste à prendre en compte les valeurs mesurées et enregistrées à l'étape optionnelle 712 du procédé ou mesurées en laboratoire selon l'une des stratégies 1 à 4 décrites précédemment puis enregistrées par le département outillage avant mise en production correspondant à la perceuse et/ou à la tête utilisée .

Si ces valeurs sont pondérées en fonction de la longueur de sortie de la broche de la perceuse conformément à l'une des stratégies 2 à 4, alors une étape de détermination de la longueur de sortie de la broche est mise en œuvre. Une telle étape est classique et connue en soit de l'homme du métier.

On détermine alors au moins une valeur de charge représentative de la trainée du système de perçage en fonction de la longueur de sortie de la broche en utilisant les courbes enregistrées dans la mémoire de la perceuse.

Si d'autres facteurs de pondération sont utilisés, comme la température de la perceuse et/ou de nombre de cycles de celle-ci, alors ces paramètres sont mesurés de façon connue en soi de l'homme du métier et les courbes correspondantes sont utilisées pour déterminer au moins une valeur de charge représentative de la trainée du système de perçage.

La détermination 732 d'au moins une valeur de charge représentative de la trainée des listels comprend la soustraction, à l'au moins une valeur de charge représentative de la trainée globale mesurée à l'étape 7303, de l'au moins une valeur de charge représentative de la trainée du système de perçage. Bien entendu, on soustrait des valeurs de charge de même grandeur physique. Par exemple, si l'on mesure en tant que valeur de charge représentative de la trainée globale et en tant que valeur de charge représentative de la trainée du système de perçage, la poussée axial et le couple, on obtiendra deux valeurs de charges représentatives de la trainée des listels à savoir l'une exprimée en N (unité représentative de la poussée axiale) et l'autre exprimée en N.m (unité représentative du couple).

Une étape 733 de comparaison l'au moins une valeur de charge représentative de la trainée des listels devient supérieure à la valeur de charge étalon maximale représentative de la traînée des listels avec la valeur de charge étalon maximale représentative de la trainée des listels correspondant au groupe matières et au type de foret considérés est mise en œuvre.

Lorsque l'au moins une valeur de charge représentative de la trainée des listels devient supérieure à la valeur de charge étalon maximale représentative de la trainée des listels correspondant au groupe matières et au type de foret considérés, on en déduit que le frottement des listels est anormal (étape 734).

Lorsqu'il est détecté 734 que le frottement des listels est anormal (nombre de détections consécutives de frottement des listels anormal égal à 1), une étape 74 de débourrage est mise en œuvre.

L'étape 74 de débourrage est suivie d'une nouvelle étape 73 de vérification du frottement des listels.

Si le frottement est de nouveau qualifié d'anormal (nombre de détections consécutives de frottement des listels anormal égal à 2), le perçage est arrêté (étape 75), le foret est rétracté (étape 76) et une alerte à destination de l'opérateur est émise (étape 77) pour lui indiquer la survenue d'une anomalie.

Si le frottement des listels est qualifié de normal (étape 735), le procédé de perçage se poursuit.

Une étape 78 de détermination de la matière en cours de perçage est mise en œuvre.

Une activation 780 des paramètres de référence prédéterminés enregistrés dans la mémoire associée au foret et correspondant au groupe de matières concerné est mise en œuvre, ou ces paramètres sont maintenus s'ils n'ont pas été arrêtés momentanément.

Au moins une information représentative de la charge brute sur le foret est mesurée après une phase de stabilisation de celle-ci et engagement complet des arêtes de coupe (ou becs de coupe) dans la nouvelle matière (étape 781). La phase de mesure peut avoir lieu sur une course du foret comprise entre 0,5 et 1 millimètre.

Au moins une valeur de charge représentative des efforts de coupe est calculée (étape 782). Celle-ci est égale à la soustraction, à l'au moins une valeur de charge brute sur le foret mesurée à l'étape 781, de l'au moins une valeur de charge représentative de la trainée globale déterminée précédemment à l'étape 730.

L'au moins une valeur de charge représentative des efforts de coupe est comparée par le contrôleur aux intervalles étalon de valeur de charge de référence représentatives des efforts de coupe enregistrés dans la mémoire du foret pour chacune des matières du groupe (étape 783).

La matière en cours de perçage identifiée est celle dont l'intervalle de valeur de charge de référence représentative des efforts de coupe contient l'au moins une valeur de charge calculée représentative des efforts de coupe (étape 784).

Si l'au moins une valeur de charge représentative des efforts de coupe calculée n'appartient à aucun intervalle étalon de valeur de charge de référence représentative des efforts de coupe des différentes matières connues (étape 785), le perçage en cours ne correspond pas au perçage d'une matière connue ce qui est la signification d'une potentielle anomalie. Le perçage est alors arrêté (étape 75), le foret rétracté (étape 76) et une alerte envoyée (étape 77) à l'opérateur pour lui signifier que les arêtes de coupe du foret sont potentiellement dégradées.

Dans le cas où une matière connue est identifiée (étape 784), et que la matière identifiée n'est pas l'air de sortie, une étape 79 de vérification des efforts de coupe de la matière identifiée est ensuite mise en œuvre.

L'étape 79 de vérification des efforts de coupe comprend une étape 790 de mesure d'au moins une valeur de charge représentative de la trainée globale due aux frottements du dispositif de perçage et aux frottements des listels.

Cette étape 790 comprend :
- une étape 7901 d'arrêt du perçage en cours ;
- une étape 7902 de recul partiel du foret sur une distance prédéterminée, ladite distance prédéterminée étant choisie de telle sorte que lesdites arêtes de coupe ne soient plus en contact avec ledit élément à percer (par exemple comprise entre 0,5 et 1 millimètre)

- une étape 7903 d'entrainement du foret, avec les paramètres de coupe matière prédéterminés correspondants au foret utilisé et à la matière identifiée, sur course d'avance hors coupe ;
- une étape 7904 de mesure, pendant la phase d'avance hors coupe, d'au moins une valeur de charge brute avant que les arêtes du foret replongent dans la matière et après stabilisation des valeurs de charge ; ces valeurs de charges sont représentatives de la traine globale (frottements système de perçage + frottement listels).

L'étape 79 comprend ensuite :
- une étape 791 d'activation ou de maintient des paramètres de coupe matière correspondant au foret utilisé et à la matière identifiée, puis
- une étape 792 de mesure d'au moins une valeur de charge brute après stabilisation et engagement des arêtes de coupe du foret dans la matière : pour cela, le foret est entrainé sur une première course de perçage, par exemple de l'ordre de 0,2 millimètres, à l'issue de laquelle les arêtes de coupe du foret ont de nouveau engagé la matière et les valeurs de charge sont stabilisées, puis la mesure est réalisée sur une deuxième course de perçage prédéterminée par exemple comprise entre 0,5 et 1 millimètre ;
- une étape 793 de détermination d'au moins une valeur de charge représentative des efforts de coupe calculée comme étant égale à la soustraction, à l'au moins une valeur de charge brute mesurée à l'étape 792, de l'au moins une valeur de charge représentative de la trainée globale déterminée à l'étape 7904.

L'au moins une valeur de charge représentative des efforts de coupe est comparée par le contrôleur à l'intervalle étalon de valeur de charge représentatives des efforts de coupe enregistrés dans la mémoire du foret correspondant à la matière identifiée en cours de perçage (étape 794).

Si l'au moins une valeur de charge représentative des efforts de coupe calculée n'appartient pas à l'intervalle de valeur de charge représentative des efforts de coupe de la matière identifiée (étape 795), une potentielle anomalie existe. Le perçage est alors arrêté (étape 75), le foret rétracté (étape 76) et une alerte envoyée (étape 77) à l'opérateur pour lui signifier une anomalie telle que le fait que les arêtes de coupe du foret sont potentiellement dégradées ou la présence d'une matière adhérente ou un autre défaut.

Si la valeur de charge représentative des efforts de coupe se trouve à l'intérieur de l'intervalle étalon de valeur de charge des efforts de coupe de la matière identifiée (étape 796), aucune anomalie n'est détectée et le perçage se poursuit jusqu'à ce que l'entrée dans une autre matière soit détectée (étape 80).

Cette étape 80 de détection de l'entrée du foret dans une nouvelle matière au cours du perçage est encore appelée étape de détection de changement de matière.

Cette étape 80 de détection de changement de matière comprend :
- une étape 800 de détermination d'au moins une valeur de charge représentative des efforts de coupe correspondant à la soustraction à l'au moins une valeur de charge brute mesurée en temps réel pendant le déplacement du foret dans la matière en cours de perçage de l'au moins une valeur de charge représentative de la trainée globale mesurée à l'étape 7904;
- une étape 801 de vérification de la présence de la valeur calculée de l'au moins une information représentative de la charge représentative des efforts de coupe à l'intérieur de l'intervalle étalon prédéterminé de valeur de charge représentative des efforts de coupe de la dernière matière identifiée correspondant au foret utilisé,
- une étape 802 de détection de l'entrée du foret dans une nouvelle matière lorsque la valeur calculée de l'au moins une charge représentative des efforts de coupe de la dernière matière identifiée ne se trouve plus à l'intérieur de l'intervalle étalon prédéterminé de valeur de charge représentative des efforts de coupe de cette matière ;
- une étape 803 de détection d'absence de changement de matière lorsque la valeur calculée de l'au moins une charge représentative des efforts de coupe de la dernière matière identifiée reste à l'intérieur de l'intervalle étalon prédéterminé de valeur de charge représentative des efforts de coupe de cette matière.

Si aucun changement de matière n'est détecté (étape 803), le procédé de perçage se poursuit jusqu'à ce qu'un changement de matière soit détecté.

Si une nouvelle matière est détectée (étape 802), de nouvelles étape 73 de vérification du frottement des listels puis 78 de détermination de la matière en cours de perçage.

Lorsque, au cours de la mise en œuvre d'une étape 78 de détermination de la matière en cours de perçage, la matière en cours de perçage identifiée est l'air de sortie, le perçage se poursuit sur une course prédéterminée, par exemple de 3 millimètres (étape 81). A l'issue de cette course, le foret est remonté (étape 82) et une alerte trou percé est envoyée à l'opérateur (étape 83).

### 6.2.3. Variantes

Dans une variante, la phase d'approche du foret dans l'air d'approche en direction de l'élément à percer peut être précédée d'une éventuelle détection que le foret se trouve bien dans l'air d'approche :
- en appliquant les paramètres de référence dès le début du cycle de perçage ;
- en calculant au moins une valeur de charge représentative des efforts de coupe ;
- en contrôlant que l'au moins une valeur charge représentative des efforts de coupe est bien dans l'intervalle étalon de valeur de charge de référence représentative des efforts de coupe, le foret se trouvant dans l'air d'approche si l'au moins une valeur de charge calculée représentative des efforts de coupe se situe bien à l'intérieur de l'intervalle étalon correspondant.

### 6.2.4. Autres applications

L'invention concerne un procédé selon la revendication 1 de perçage d'un élément à percer au moyen d'un dispositif de perçage et d'un outil de coupe comprenant des listels et des arêtes de coupe, ledit procédé comprenant une étape de détermination d'au moins une valeur de charge représentatives de la trainée globale due aux frottements internes dudit dispositif de perçage et au frottement desdits listels dans ledit élément à percer, cette étape comprenant les sous étapes suivantes :
- arrêt de ladite opération de perçage en cours ;
- recul partiel dudit outil de coupe sur une distance prédéterminée, ladite distance prédéterminée étant choisie de telle sorte que lesdites arêtes de coupe ne soient plus en contact avec ledit élément à percer ;
- entrainement dudit outil de coupe avec des paramètres de coupe prédéterminés ;
- mesure d'au moins une valeur de charge pendant l'entrainement dudit outil de coupe avec lesdits paramètres de coupe avant que ses arêtes de coupe n'entrent de nouveau en contact avec ledit élément à percer, et après stabilisation desdites valeurs de charge, ladite au moins une valeur de charge mesurée étant représentative de ladite trainée globale.

De préférence, le procédé comprend une étape de détermination d'au moins une valeur de charge représentative de la trainée des listels due au frottement desdits listels dans ledit élément à percer, cette étape comprenant les sous-étapes suivantes :
- la détermination d'au moins une valeur de charge représentative de la trainée dudit dispositif de perçage due aux frottements internes dudit dispositif de perçage fonctionnant avec lesdits paramètres de coupe prédéterminés ;
- la soustraction, à ladite au moins une valeur de charge représentatives de la trainée globale, de ladite au moins une valeur de charge représentatives de la trainée dudit dispositif de perçage, le résultat de ladite soustraction étant égal à ladite au moins une valeur de charge représentative de la trainée des listels.

De préférence, le procédé comprend une étape de détermination d'au moins une valeur de charge représentative des efforts de coupe générés par l'enlèvement de matière dudit élément à percer au cours d'une opération de perçage, comprenant les sous-étapes suivantes :
- mesure d'au moins une valeur de charge au cours du perçage dudit élément à percer avec lesdits paramètres de coupe prédéterminés ;
- soustraction, à ladite au moins une valeur de charge mesurée au cours du perçage dudit élément à percer, de ladite au moins une valeur de charge représentative de ladite trainée globale.

De telles informations peuvent être utilisées dans diverses applications autres que celle consistant à fiabiliser la détermination d'une matière nouvellement rencontrée tel que cela est le cas du mode de réalisation qui vient d'être décrit.

Les frottements des listels peuvent être pris en considération par exemple pour détecter une mauvaise évacuation copeau (bourrage) ou le resserrement matière sur foret,

Les efforts de coupe peuvent être pris en considération par exemple pour détecter une usure des arêtes de coupe d'un foret, une matière adhérente.

Dans chacune des applications, des seuils seront prédéterminés en laboratoire pour chaque matière et chaque type de foret à partir de l'atteinte desquels on détecte une mauvaise évacuation du copeau, un resserrement de la matière, une usure du foret, une matière adhérente.

En production, le dépassement de ces seuils correspondra respectivement à la détection d'une mauvaise évacuation du copeau, du resserrement de la matière, d'une usure du foret, d'une matière adhérente. Bien entendu, cette liste d'applications n'est pas exhaustive. Les différents paramètres mentionnés plus haut pourront être pris en considération dans le cadre d'autres applications.

### ANNEXES

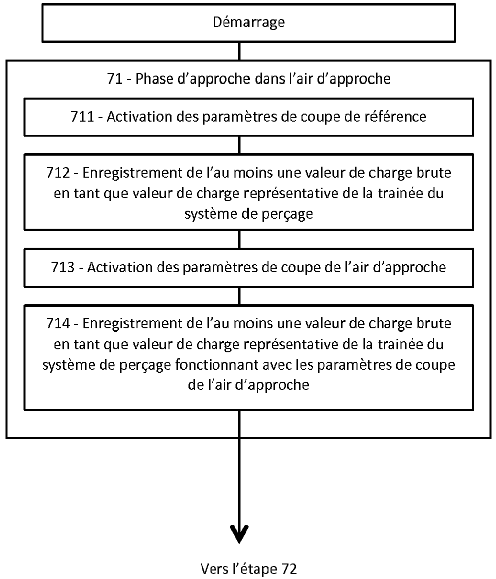

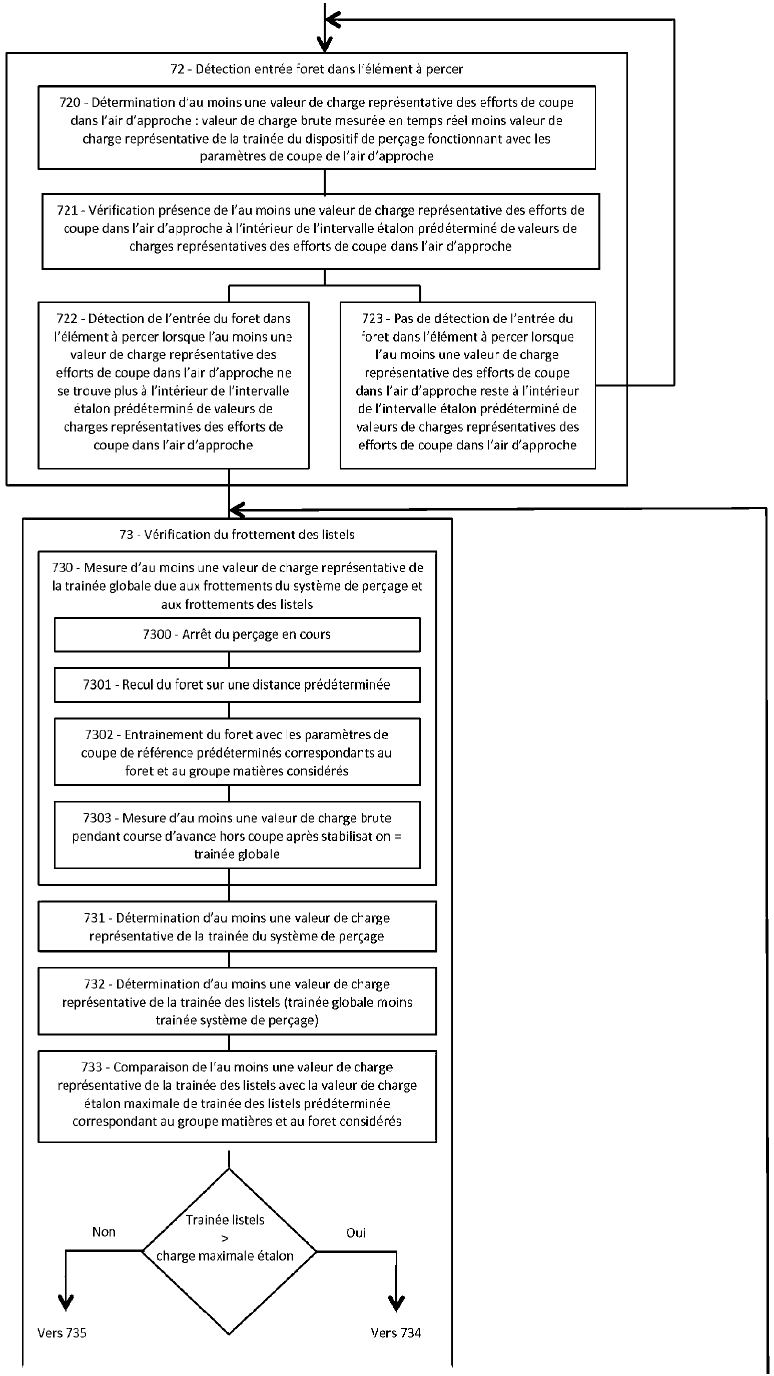

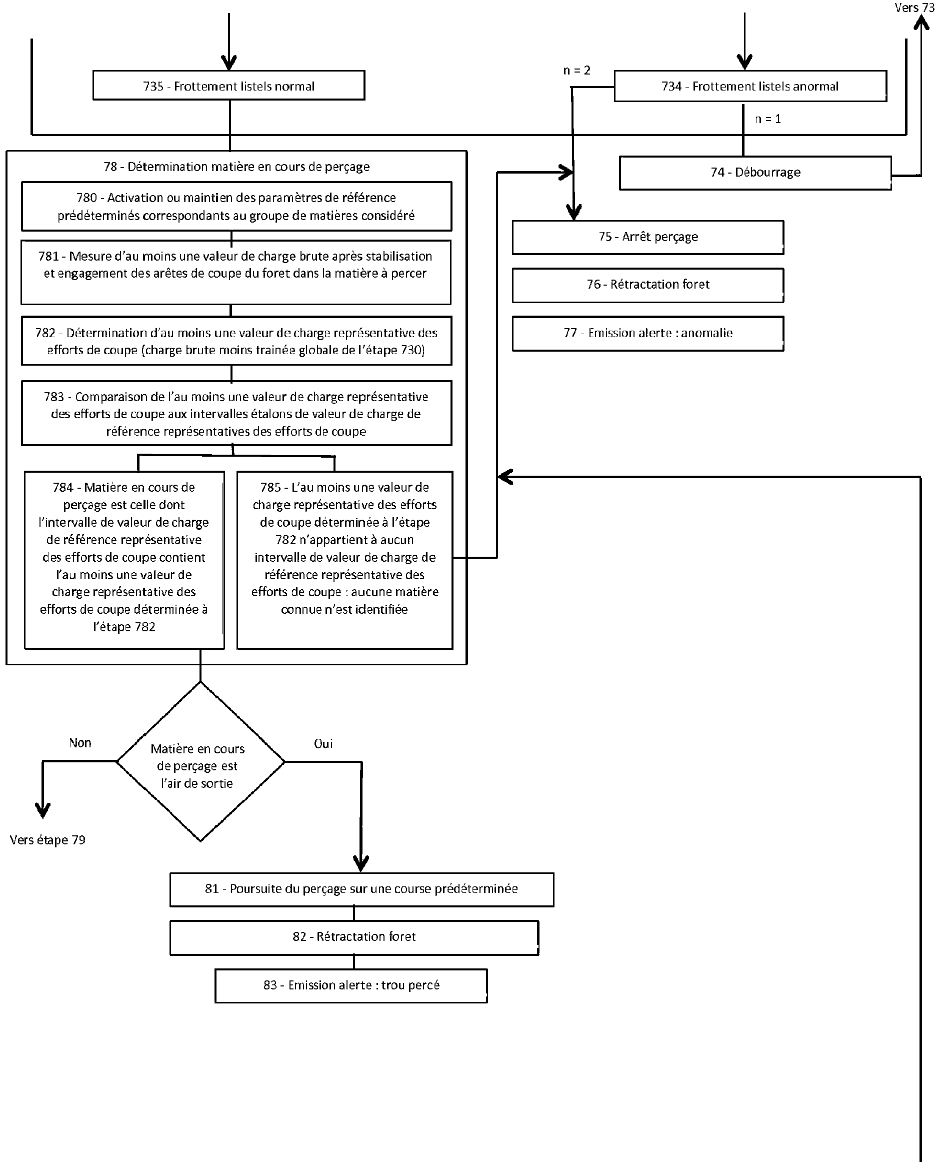

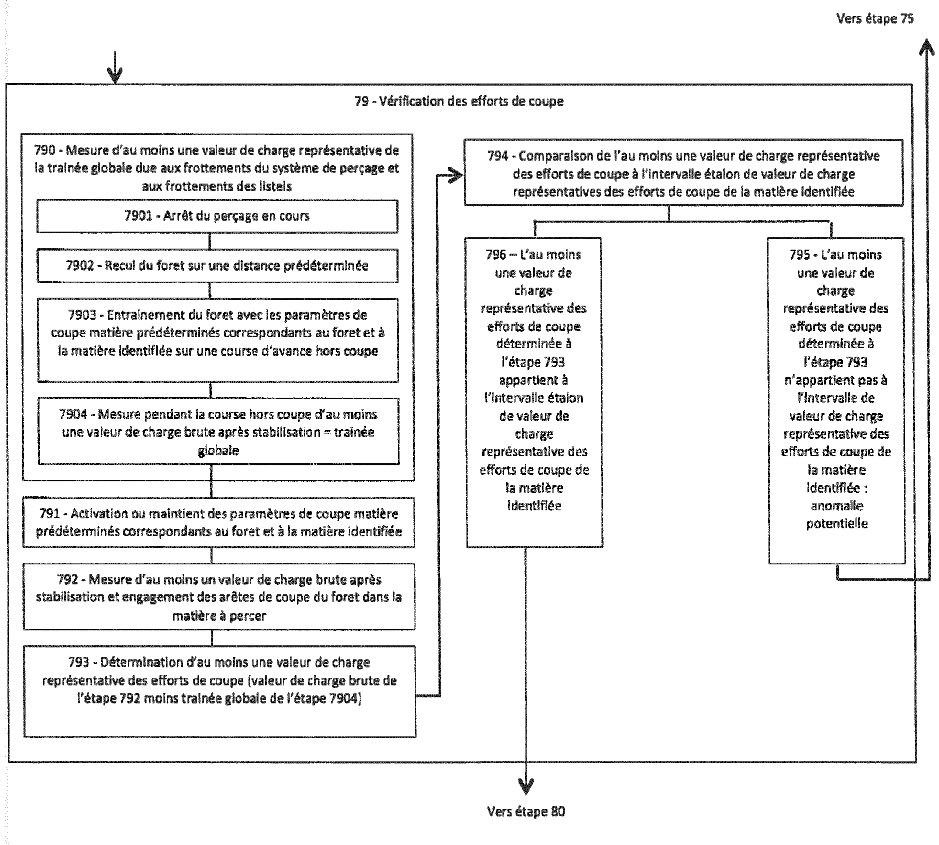

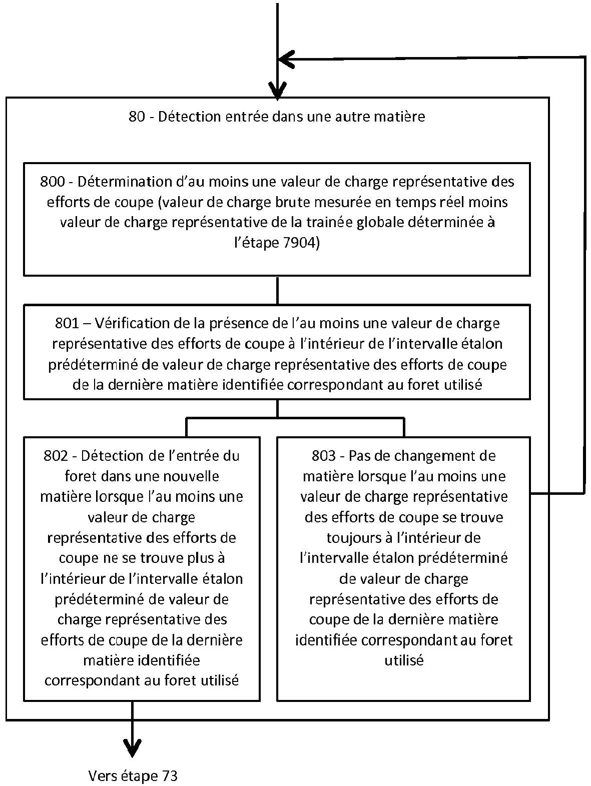

## Revendications

1. Procédé de perçage d'un élément à percer comprenant un empilement d'une succession de couches de matières différentes au moyen d'un dispositif de perçage (10 et d'un outil de coupe (13) comprenant des listels (133) et des arêtes de coupe (131), ledit procédé comprenant les étapes de :
- détermination d'au moins une valeur de charge représentatives de la trainée globale due aux frottements internes dudit dispositif de perçage et au frottement desdits listels dans ledit élément à percer, ladite étape de détermination d'au moins une valeur de charge représentatives de ladite trainée globale comprenant les sous étapes suivantes :
- arrêt de l'opération de perçage en cours ;
- recul partiel dudit outil de coupe sur une distance prédéterminée, ladite distance prédéterminée étant choisie de telle sorte que lesdites arêtes de coupe ne soient plus en contact avec ledit élément à percer alors que les listels se trouvent toujours à l'intérieur du trou en cours de perçage dans l'élément à percer ;
- entrainement dudit outil de coupe avec des paramètres de coupe prédéterminés ;
- mesure d'au moins une valeur de charge pendant l'entrainement dudit outil de coupe avec lesdits paramètres de coupe avant que ses arêtes de coupe n'entrent de nouveau en contact avec ledit élément à percer, et après stabilisation desdites valeurs de charge, l'au moins une valeur de charge ainsi mesurée étant ladite au moins une valeur de charge représentative de ladite trainée globale due aux frottements internes dudit dispositif de perçage et au frottement desdits listels dans ledit élément à percer ;
- détection, à l'aide de ladite au moins une valeur de charge représentatives de la trainée globale, de la survenue d'un événement dont la prise en considération peut permettre d'optimiser le perçage.

2. Procédé selon la revendication 1 comprenant une étape de détermination d'au moins une valeur de charge représentative de la trainée des listels due au frottement desdits listels dans ledit élément à percer, cette étape comprenant les sous-étapes suivantes :
- la détermination d'au moins une valeur de charge représentatives de la trainée dudit dispositif de perçage due aux frottements internes dudit dispositif de perçage fonctionnant avec lesdits paramètres de coupe prédéterminés ;
- la soustraction, à ladite au moins une valeur de charge représentatives de la trainée globale, de ladite au moins une valeur de charge représentatives de la trainée dudit dispositif de perçage, le résultat de ladite soustraction étant égal à ladite au moins une valeur de charge représentative de la trainée des listels.

3. Procédé selon la revendication selon la revendication 1 ou 2 comprenant une étape de détermination d'au moins une valeur de charge représentative des efforts de coupe générés par l'enlèvement de matière dudit élément à percer au cours d'une opération de perçage, comprenant les sous-étapes suivantes :
- mesure d'au moins une valeur de charge au cours du perçage dudit élément à percer avec lesdits paramètres de coupe prédéterminés ;
- soustraction, à ladite au moins une valeur de charge mesurée au cours du perçage dudit élément à percer, de ladite au moins une valeur de charge représentative de ladite trainée globale, le résultat de ladite soustraction étant égal à ladite au moins une valeur de charge représentative des efforts de coupe.

4. Procédé selon la revendication 3 dans lequel lesdits paramètres de coupe prédéterminés sont des paramètres de coupe de référence spécifiques au groupe de matières auquel appartient la matière en cours de perçage et au type de foret mis en oeuvre pour réaliser l'opération de perçage en cours, ledit procédé comprenant une étape de comparaison de ladite au moins une valeur de charge représentative des efforts de coupe avec des intervalles prédéterminés de valeur de charge de référence représentatifs des efforts de coupe, chacun desdits intervalles étant spécifique à une des matières dudit groupe.

5. Procédé selon la revendication 4 comprenant une étape d'arrêt de l'opération de perçage en cours et/ou d'émission d'un signal d'alerte lorsque ladite au moins une valeur de charge représentative des efforts de coupe n'appartient à aucun desdits intervalles de valeur de charge de référence représentatifs des efforts de coupe.

6. Procédé selon la revendication 2, comprenant une étape de vérification du frottement desdits listels comprenant :
- la comparaison de ladite au moins une valeur de charge représentative de la trainée des listels à une valeur seuil prédéterminée ;
- la détection d'un frottement anormal desdits listels lorsque ladite au moins une valeur de charge représentative de la trainée des listels devient supérieure à ladite valeur seuil prédéterminée.

7. Procédé selon la revendication 6 comprenant une étape de débourrage lorsqu'il est détecté que le frottement des listels est anormal.

8. Procédé selon la revendication 3 dans lequel lesdits paramètres de coupe prédéterminés sont des paramètres de coupe matière prédéterminés spécifiques à la matière en cours de perçage et au type de foret mis en oeuvre pour réaliser l'opération de perçage en cours, ledit procédé comprenant une étape de vérification des efforts de coupe comprenant la comparaison de ladite au moins une valeur de charge représentative des efforts de coupe à un intervalle étalon de valeurs de charge de coupe matière prédéterminé spécifique à la matière en cours de perçage pour un foret dont les arêtes de coupe présentent la qualité minimale requise pour un perçage correct et pour lesdits paramètres de coupe matière prédéterminés.

9. Procédé selon la revendication 8, dans lequel ladite étape de vérification des efforts de coupe comprend la détection d'efforts de coupe anomaux lorsque ladite au moins une valeur de charge représentative des efforts de coupe n'est pas comprise dans ledit intervalle étalon de valeurs de charge de coupe matière.

10. Procédé selon les revendications 3, 4 et 8, comprenant une étape d'identification de la matière en cours de perçage, ladite étape d'identification comprenant :
- une étape d'activation ou de maintien des paramètres de coupe de référence spécifiques au groupe de matières auquel appartient la matière en cours de perçage et au type de foret mis en oeuvre pour réaliser l'opération de perçage en cours ;
- une étape de détermination de la matière en cours de perçage, ladite matière en cours de perçage étant celle dont l'intervalle de valeur de charges de référence représentatives des efforts de coupe contient ladite au moins une valeur de charge représentative des efforts de coupe ;
- une étape d'activation de paramètres de coupe matière prédéterminés spécifiques à la matière identifiée à ladite étape de détermination et au type de foret mis en oeuvre ;
- une étape de détermination d'au moins une valeur de charge représentative des efforts de coupe avec lesdits paramètres de coupe matière ;
- une étape de validation de la matière identifiée au cours de ladite étape de détermination, ladite détermination de la matière étant validée lorsque l'au moins une valeur de charge représentative des efforts de coupe, déterminée en mettant en oeuvre lesdits paramètres de coupe matière, appartient à un intervalle de valeurs de charge représentatives des efforts de coupe prédéterminé avec lesdits paramètres de coupe matière pour la matière identifiée.

11. Dispositif de perçage (10) destiné à être mis en oeuvre pour réaliser au moins une opération de perçage d'un élément à percer, comprenant un empilement d'une succession de couches de matières différentes, au moyen d'un outil de coupe (13) comprenant des listels (133) et des arêtes de coupe (131), ledit dispositif comprenant des moyens de détermination d'au moins une valeur de charge représentatives de la trainée globale due aux frottements internes dudit dispositif de perçage et au frottement desdits listels dans ledit élément à percer, lesdits moyens de détermination d'au moins une valeur de charge représentatives de ladite trainée globale comprenant :
- un contrôleur (19) réalisé pour effectuer les étape d'un procédé de perçage selon l'une quelconque des revendications 1 à 10 ;
- des moyens d'arrêt de l'opération de perçage en cours ;
- des moyens de recul partiel dudit outil de coupe sur une distance prédéterminée, ladite distance prédéterminée étant choisie de telle sorte que lesdites arêtes de coupe ne soient plus en contact avec ledit élément à percer alors que les listels se trouvent toujours à l'intérieur du trou en cours de perçage dans l'élément à percer ;
- des moyens d'entrainement dudit outil de coupe avec des paramètres de coupe prédéterminés ;
- des moyens de mesure d'au moins une valeur de charge pendant l'entrainement dudit outil de coupe avec lesdits paramètres de coupe avant que ses arêtes de coupe n'entrent de nouveau en contact avec ledit élément à percer, et après stabilisation desdites valeurs de charge,
l'au moins une valeur de charge ainsi mesurée étant ladite au moins une valeur de charge représentative de la trainée globale due aux frottements internes dudit dispositif de perçage et au frottement desdits listels dans ledit élément à percer.

12. Dispositif selon la revendication 11 comprenant des moyens de détermination d'au moins une valeur de charge représentative de la trainée des listels due au frottement desdits listels dans ledit élément à percer, ces moyens comprenant :
- des moyens de détermination d'au moins une valeur de charge représentatives de la trainée dudit dispositif de perçage due aux frottements internes dudit dispositif de perçage fonctionnant avec lesdits paramètres de coupe prédéterminés ;
- des moyens de soustraction, à ladite au moins une valeur de charge représentatives de la trainée globale, de ladite au moins une valeur de charge représentatives de la trainée dudit dispositif de perçage, le résultat de ladite soustraction étant égal à ladite au moins une valeur de charge représentative de la trainée des listels.

13. Dispositif selon la revendication selon la revendication 11 ou 12 comprenant des moyens de détermination d'au moins une valeur de charge représentative des efforts de coupe générés par l'enlèvement de matière dudit élément à percer au cours d'une opération de perçage, ces moyens comprenant :
- des moyens de mesure d'au moins une valeur de charge au cours du perçage dudit élément à percer avec lesdits paramètres de coupe prédéterminés ;
- des moyens de soustraction, à ladite au moins une valeur de charge mesurée au cours du perçage dudit élément à percer, de ladite au moins une valeur de charge représentative de ladite trainée globale, le résultat de ladite soustraction étant égal à ladite au moins une valeur de charge représentative des efforts de coupe.

14. Dispositif selon la revendication 13 dans lequel lesdits paramètres de coupe prédéterminés sont des paramètres de coupe de référence spécifiques au groupe de matières auquel appartient la matière en cours de perçage et au type de foret mis en oeuvre pour réaliser l'opération de perçage en cours, ledit dispositif comprenant des moyens de comparaison de ladite au moins une valeur de charge représentative des efforts de coupe avec des intervalles prédéterminés de valeur de charge de référence représentatifs des efforts de coupe, chacun desdits intervalles étant spécifique à une des matières dudit groupe.

15. Dispositif selon la revendication 14 comprenant des moyens d'arrêt de l'opération de perçage en cours et/ou d'émission d'un signal d'alerte lorsque ladite au moins une valeur de charge représentative des efforts de coupe n'appartient à aucun desdits intervalles de valeur de charge de référence représentatifs des efforts de coupe.

16. Dispositif selon la revendication 12, comprenant des moyens de vérification du frottement desdits listels comprenant :
- des moyens de comparaison de ladite au moins une valeur de charge représentative de la trainée des listels à une valeur seuil prédéterminée ;
- des moyens de détection d'un frottement anormal desdits listels lorsque ladite au moins une valeur de charge représentative de la trainée des listels devient supérieure à ladite valeur seuil prédéterminée.

17. Dispositif selon la revendication 16 comprenant des moyens de commande d'un débourrage lorsqu'il est détecté que le frottement des listels est anormal.

18. Dispositif selon la revendication 13 dans lequel lesdits paramètres de coupe prédéterminés sont des paramètres de coupe matière prédéterminés spécifiques à la matière en cours de perçage et au type de foret mis en oeuvre pour réaliser l'opération de perçage en cours, ledit dispositif comprenant des moyens de vérification des efforts de coupe comprenant des moyens de comparaison de ladite au moins une valeur de charge représentative des efforts de coupe à un intervalle étalon de valeurs de charge de coupe matière prédéterminé spécifique à la matière en cours de perçage pour un foret dont les arêtes de coupe présentent la qualité minimale requise pour un perçage correct et pour lesdits paramètres de coupe matière prédéterminés.

19. Dispositif selon la revendication 18 comprenant des moyens de détection d'efforts de coupe anomaux lorsque ladite au moins une valeur de charge représentative des efforts de coupe n'est pas comprise dans ledit intervalle étalon de valeurs de charge de coupe matière.

20. Dispositif selon les revendications 13, 14 et 19, comprenant des moyens d'identification de la matière en cours de perçage, lesdits moyens d'identification comprenant :
- des moyens d'activation ou de maintien des paramètres de coupe de référence spécifiques au groupe de matières auquel appartient la matière en cours de perçage et au type de foret mis en oeuvre pour réaliser l'opération de perçage en cours ;
- des moyens de détermination de la matière en cours de perçage, ladite matière en cours de perçage étant celle dont l'intervalle de valeur de charges de référence représentatives des efforts de coupe contient ladite au moins une valeur de charge représentative des efforts de coupe ;
- des moyens d'activation de paramètres de coupe matière prédéterminés spécifiques à la matière identifiée à ladite étape de détermination et au type de foret mis en oeuvre ;
- des moyens de détermination d'au moins une valeur de charge représentative des efforts de coupe avec lesdits paramètres de coupe matière ;
- des moyens de validation de la matière identifiée au cours de ladite étape de détermination, ladite détermination de la matière étant validée lorsque l'au moins une valeur de charge représentative des efforts de coupe, déterminée en mettant en oeuvre lesdits paramètres de coupe matière, appartient à un intervalle de valeurs de charge représentatives des efforts de coupe prédéterminé avec lesdits paramètres de coupe matière pour la matière identifiée.

## Patentansprüche

1. Verfahren zum Bohren eines zu bohrenden Elements, das einen Stapel aus einer Folge von Schichten unterschiedlicher Materialien umfasst, mittels einer Bohrvorrichtung (10) und eines Schneidwerkzeugs (13), welches Fasen (133) und Schneidkanten (131) aufweist, wobei das Verfahren die folgenden Schritte umfasst:
- Bestimmen mindestens eines Lastwerts, der für den Gesamtwiderstand aufgrund der inneren Reibung der Bohrvorrichtung und der Reibung der Fasen in dem zu bohrenden Element repräsentativ ist, wobei der Schritt des Bestimmens mindestens eines für den Gesamtwiderstand repräsentativen Lastwerts die folgenden Unterschritte umfasst:
- Anhalten des laufenden Bohrvorgangs,
- teilweises Zurückziehen des Schneidwerkzeugs über einen vorbestimmten Abstand, wobei der vorbestimmte Abstand derart gewählt wird, dass die Schneidkanten nicht mehr mit dem zu bohrenden Element in Kontakt stehen, während sich die Fasen noch innerhalb des gerade gebohrten Lochs in dem zu bohrenden Element befinden,
- Antreiben des Schneidwerkzeugs mit vorbestimmten Schneidparametern,
- Messen mindestens eines Lastwerts während des Antreibens des Schneidwerkzeugs mit den Schneidparametern, bevor seine Schneidkanten wieder mit dem zu bohrenden Element in Kontakt kommen, wobei der mindestens eine so gemessene Lastwert nach Stabilisierung der Lastwerte derjenige ist, der für den Gesamtwiderstand aufgrund der inneren Reibung der Bohrvorrichtung und der Reibung der Fasen in dem zu bohrenden Element repräsentativ ist;
- Erfassen, anhand des mindestens eines Lastwerts umfasst, der für den Gesamtwiderstand repräsentativ ist, des Auftretens eines Ereignisses, dessen Berücksichtigung eine Optimierung des Bohrvorgangs ermöglichen kann.

2. Verfahren nach Anspruch 1, umfassend einen Schritt des Bestimmens mindestens eines für den Widerstand der Fasen aufgrund der Reibung der Fasen in dem zu bohrenden Element repräsentativen Lastwerts, wobei dieser Schritt die folgenden Unterschritte umfasst:
- das Bestimmen mindestens eines für den Widerstand der Bohrvorrichtung aufgrund der inneren Reibung derjenigen Bohrvorrichtung, die mit den vorbestimmten Schneidparametern arbeitet, repräsentativen Lastwerts,
- die Subtraktion des mindestens einen für den Widerstand der Bohrvorrichtung repräsentativen Lastwerts von dem mindestens einen Lastwert, der für den Gesamtwiderstand repräsentativ ist, wobei das Ergebnis der Subtraktion gleich dem mindestens einen Lastwert ist, der für den Widerstand der Fasen repräsentativ ist.

3. Verfahren nach Anspruch 1 oder 2, umfassend einen Schritt des Bestimmens mindestens eines für diejenigen Schnittkräfte repräsentativen Lastwerts, die durch das Entfernen von Material von dem zu bohrenden Element während eines Bohrvorgangs erzeugt werden, der die folgenden Unterschritte umfasst:
- Messen mindestens eines Lastwerts während des Bohrens des zu bohrenden Elements mit den vorbestimmten Schneidparametern,
- Subtraktion des mindestens einen für den Gesamtwiderstand repräsentativen Lastwerts von dem mindestens einen Lastwert, der während des Bohrens des zu bohrenden Elements gemessen wird, wobei das Ergebnis der Subtraktion gleich dem mindestens einen Lastwert ist, der für die Schnittkräfte repräsentativ ist.

4. Verfahren nach Anspruch 3, wobei die vorbestimmten Schneidparameter Referenzschneidparameter sind, die für die Gruppe von Materialien, zu der das Material gehört, das gerade gebohrt wird, und die Art desjenigen Bohrers spezifisch sind, der eingesetzt wird, um den laufenden Bohrvorgang durchzuführen, wobei das Verfahren einen Schritt des Vergleichens des mindestens einen für die Schnittkräfte repräsentativen Lastwerts mit vorbestimmten, für die Schnittkräfte repräsentativen Bereichen des Referenzlastwerts aufweist, wobei jeder der Bereiche für eines der Materialien der Gruppe spezifisch ist.

5. Verfahren nach Anspruch 4, umfassend einen Schritt des Anhaltens des laufenden Bohrvorgangs und/oder des Sendens eines Warnsignals, wenn der mindestens eine Lastwert, der für die Schnittkräfte repräsentativ ist, zu keinem der für die Schnittkräfte repräsentativen Bereiche des Referenzlastwerts gehört.

6. Verfahren nach Anspruch 2, umfassend einen Schritt des Überprüfens der Reibung der Fasen, umfassend:
- das Vergleichen des mindestens einen Lastwerts, der für den Widerstand der Fasen repräsentativ ist, mit einem vorbestimmten Schwellenwert,
- das Feststellen einer anomalen Reibung der Fasen, wenn der mindestens eine Lastwert, der für den Widerstand der Fasen repräsentativ ist, höher als der vorbestimmte Schwellenwert wird.

7. Verfahren nach Anspruch 6, umfassend einen Schritt des Entkernens, wenn festgestellt wird, dass die Reibung der Fasen anomal ist.

8. Verfahren nach Anspruch 3, wobei die vorbestimmten Schneidparameter vorbestimmte Materialschneidparameter sind, die für das gerade gebohrte Material und die Art desjenigen Bohrers spezifisch sind, der eingesetzt wird, um den laufenden Bohrvorgang durchzuführen, wobei das Verfahren einen Schritt des Überprüfens der Schnittkräfte umfassend das Vergleichen des mindestens einen für die Schnittkräfte repräsentativen Lastwerts mit einem vorbestimmten kalibrierten Bereich von Materialschneid-Lastwerten umfasst, der für das gerade gebohrte Material, für einen Bohrer, dessen Schneidkanten die erforderliche Mindestqualität für ein korrektes Bohren aufweisen, und für die vorbestimmten Materialschneidparameter spezifisch ist.

9. Verfahren nach Anspruch 8, wobei der Schritt des Überprüfens der Schnittkräfte das Erfassen von anomalen Schnittkräften aufweist, wenn der mindestens eine Lastwert, der für die Schnittkräfte repräsentativ ist, nicht in dem kalibrierten Bereich von Materialschneid-Lastwerten enthalten ist.

10. Verfahren nach Anspruch 3, 4 und 8, umfassend einen Schritt des Identifizierens des Materials, das gerade gebohrt wird, wobei der Schritt des Identifizierens umfasst:
- einen Schritt des Aktivierens oder des Aufrechterhaltens der Referenzschneidparameter, die für die Gruppe von Materialien, zu der das Material gehört, das gerade gebohrt wird, und die Art des Bohrers spezifisch sind, der eingesetzt wird, um den laufenden Bohrvorgang durchzuführen;
- einen Schritt des Bestimmens des Materials, das gerade gebohrt wird, wobei das Material, das gerade gebohrt wird, jenes ist, dessen Bereich des für die Schnittkräfte repräsentativen Referenzlastwerts den mindestens einen Lastwert enthält, der für die Schnittkräfte repräsentativ ist;
- einen Schritt des Aktivierens von vorbestimmten Materialschneidparametern, die für das in dem Schritt des Bestimmens identifizierte Material und die Art des eingesetzten Bohrers spezifisch sind,
- einen Schritt des Bestimmens mindestens eines Lastwerts, der für die Schnittkräfte mit den Materialschneidparametern repräsentativ ist,
- einen Schritt des Validierens des bei dem Schritt des Bestimmens identifizierten Materials, wobei das Bestimmen des Materials validiert wird, wenn der mindestens eine für die Schnittkräfte repräsentative Lastwert, der bestimmt wird, indem die Materialschneidparameter umgesetzt werden, zu einem Bereich von vorbestimmen Lastwerten gehört, die für die Schnittkräfte mit den Materialschneidparametern für das identifizierte Material repräsentativ sind.

11. Bohrvorrichtung (10), die dazu bestimmt ist, zum Durchführen mindestens eines Bohrvorgangs eines zu bohrenden Elements, das einen Stapel aus einer Folge von Schichten unterschiedlicher Materialien umfasst, mittels eines Schneidwerkzeugs (13) eingesetzt zu werden, welches Fasen (133) und Schneidkanten (131) aufweist, wobei die Vorrichtung Mittel zum Bestimmen mindestens eines für den Gesamtwiderstand aufgrund der inneren Reibung der Bohrvorrichtung und der Reibung der Fasen in dem zu bohrenden Element repräsentativen Lastwerts aufweist, wobei die Mittel zum Bestimmen mindestens eines für den Gesamtwiderstand repräsentativen Lastwerts aufweisen:
- eine Steuereinheit (19), die dazu eingerichtet ist, die Schritte eines Verfahrens zum Bohren nach einem der Ansprüche 1 bis 10 durchzuführen,
- Mittel zum Anhalten des laufenden Bohrvorgangs,
- Mittel zum teilweisen Zurückziehen des Schneidwerkzeugs über einen vorbestimmten Abstand, wobei der vorbestimmte Abstand derart gewählt ist, dass die Schneidkanten nicht mehr mit dem zu bohrenden Element in Kontakt stehen, während sich die Fasen noch innerhalb des gerade gebohrten Lochs in dem zu bohrenden Element befinden,
- Mittel zum Antreiben des Schneidwerkzeugs mit vorbestimmten Schneidparametern,
- Mittel zum Messen mindestens eines Lastwerts während des Antreibens des Schneidwerkzeugs mit den Schneidparametern, bevor seine Schneidkanten wieder mit dem zu bohrenden Element in Kontakt kommen, und wobei nach Stabilisierung der Lastwerte
der mindestens eine so gemessene Lastwert derjenige mindestens eine Lastwert ist, der für den Gesamtwiderstand aufgrund der inneren Reibung der Bohrvorrichtung und der Reibung der Fasen in dem zu bohrenden Element repräsentativ ist.

12. Vorrichtung nach Anspruch 11, umfassend Mittel zum Bestimmen mindestens eines für den Widerstand der Fasen aufgrund der Reibung der Fasen in dem zu bohrenden Element repräsentativen Lastwerts, wobei diese Mittel aufweisen:
- Mittel zum Bestimmen mindestens eines für den Widerstand der Bohrvorrichtung aufgrund der inneren Reibung der Bohrvorrichtung, die mit den vorbestimmten Schneidparametern arbeitet, repräsentativen Lastwerts,
- Mittel zur Subtraktion des mindestens einen für den Widerstand der Bohrvorrichtung repräsentativen Lastwerts von dem mindestens einen für den Gesamtwiderstand repräsentativen Lastwert, wobei das Ergebnis der Subtraktion gleich dem mindestens einen Lastwert ist, der für den Widerstand der Fasen repräsentativ ist.

13. Vorrichtung nach Anspruch 11 oder 12, umfassend Mittel zum Bestimmen mindestens eines für diejenigen Schnittkräfte repräsentativen Lastwerts, die durch das Entfernen von Material von dem zu bohrenden Element während eines Bohrvorgangs erzeugt werden, wobei diese Mittel aufweisen:
- Mittel zum Messen mindestens eines Lastwerts während des Bohrens des zu bohrenden Elements mit den vorbestimmten Schneidparametern,
- Mittel zur Subtraktion des mindestens einen für den Gesamtwiderstand repräsentativen Lastwerts von dem mindestens einen Lastwert, der während des Bohrens des zu bohrenden Elements gemessen wird, wobei das Ergebnis der Subtraktion gleich dem mindestens einen Lastwert ist, der für die Schnittkräfte repräsentativ ist.

14. Vorrichtung nach Anspruch 13, wobei die vorbestimmten Schneidparameter Referenzschneidparameter sind, die für die Gruppe von Materialien, zu der das Material gehört, das gerade gebohrt wird, und die Art des Bohrers spezifisch sind, der eingesetzt wird, um den laufenden Bohrvorgang durchzuführen, wobei die Vorrichtung Mittel zum Vergleichen des mindestens einen für die Schnittkräfte repräsentativen Lastwerts mit vorbestimmten für die Schnittkräfte repräsentativen Bereichen des Referenzlastwerts aufweist, wobei jeder der Bereiche für eines der Materialien der Gruppe spezifisch ist.

15. Vorrichtung nach Anspruch 14, umfassend Mittel zum Anhalten des laufenden Bohrvorgangs und/oder des Sendens eines Warnsignals, wenn der mindestens eine Lastwert, der für die Schnittkräfte repräsentativ ist, zu keinem derjenigen Bereiche des Referenzlastwerts gehört, die für die Schnittkräfte repräsentativ sind.

16. Vorrichtung nach Anspruch 12, umfassend Mittel zum Überprüfen der Reibung der Fasen, umfassend:
- Mittel zum Vergleichen des mindestens eines für den Widerstand der Fasen repräsentativen Lastwerts mit einem vorbestimmten Schwellenwert,
- Mittel zum Feststellen einer anomalen Reibung der Fasen, wenn der mindestens eine Lastwert, der für den Widerstand der Fasen repräsentativ ist, höher als der vorbestimmte Schwellenwert wird.

17. Vorrichtung nach Anspruch 16, umfassend Mittel zum Steuern eines Entkernens, wenn festgestellt wird, dass die Reibung der Fasen anomal ist.

18. Vorrichtung nach Anspruch 13, wobei die vorbestimmten Schneidparameter vorbestimmte Materialschneidparameter sind, die für das Material, das gerade gebohrt wird, und die Art des Bohrers spezifisch sind, der eingesetzt wird, um den laufenden Bohrvorgang durchzuführen, wobei die Vorrichtung Mittel zum Überprüfen der Schnittkräfte aufweist, umfassend Mittel zum Vergleichen des mindestens einen für die Schnittkräfte repräsentativen Lastwerts mit einem vorbestimmten kalibrierten Bereich von Materialschneid-Lastwerten, der für das Material, das gerade gebohrt wird, für einen Bohrer, dessen Schneidkanten die erforderliche Mindestqualität für ein korrektes Bohren aufweisen und für die vorbestimmten Materialschneidparameter spezifisch ist.

19. Vorrichtung nach Anspruch 18, umfassend Mittel zum Erfassen von anomalen Schnittkräften, wenn der mindestens eine für die Schnittkräfte repräsentative Lastwert nicht in dem kalibrierten Bereich von Materialschneid-Lastwerten enthalten ist.

20. Vorrichtung nach Anspruch 13, 14 und 19, umfassend Mittel zum Identifizieren des Materials, das gerade gebohrt wird, wobei die Mittel zum Identifizieren aufweisen:
- Mittel zum Aktivieren oder Aufrechterhalten der Referenzschneidparameter, die für die Gruppe von Materialien, zu der das Material gehört, das gerade gebohrt wird, und die Art des Bohrers spezifisch sind, der eingesetzt wird, um den laufenden Bohrvorgang durchzuführen,
- Mittel zum Bestimmen des Materials, das gerade gebohrt wird, wobei das Material, das gerade gebohrt wird, jenes ist, dessen Bereich der für die Schnittkräfte repräsentativen Referenzlastwerte den mindestens einen Lastwert enthält, der für die Schnittkräfte repräsentativ ist,
- Mittel zum Aktivieren von vorbestimmten Materialschneidparametern, die für das in dem Schritt des Bestimmens identifizierte Material und die Art des eingesetzten Bohrers spezifisch sind,
- Mittel zum Bestimmen mindestens eines Lastwerts, der für die Schnittkräfte mit den Materialschneidparametern repräsentativ ist,
- Mittel zum Validieren des bei dem Schritt des Bestimmens identifizierten Materials, wobei das Bestimmen des Materials validiert wird, wenn der mindestens eine für die Schnittkräfte repräsentative Lastwert, der bestimmt wird, indem die Materialschneidparameter umgesetzt werden, zu einem Bereich von vorbestimmen Lastwerten gehört, die für die Schnittkräfte mit den Materialschneidparametern für das identifizierte Material repräsentativ sind.

## Claims

1. A method for drilling an element to be drilled, comprising a stack of successive layers of different materials, by means of a piercing device (10) and a cutting tool (13) comprising listels (133) and cutting edges (131), said method comprising steps of:
- determining at least one load value representative of the overall drag due to the internal friction of said piercing device and to the friction of said listels in said element to be drilled, said step of determining at least one load value representative of said overall drag comprising the following sub-steps:
- stopping the drilling operation in progress;
- partially retracting said cutting tool over a predetermined distance, said predetermined distance being chosen so that said cutting edges are no longer in contact with said element to be drilled while the listels are still inside the hole being drilled in the element to be drilled;
- driving said cutting tool with predetermined cutting parameters;
- measuring at least one load value when driving said cutting tool with said cutting parameters before its cutting edges again come into contact with said element to be drilled, and after stabilisation of said load values, the at least one load value thus measured being said at least one load value representative of said overall drag due to internal friction of said piercing device and to the friction of said listels in said element to be drilled;
- detection, with the aid of the said at least one load value representative of the overall drag, of the occurrence of an event which, if taken into account, may make it possible to optimise drilling.

2. The method according to claim 1 comprising a step of determining at least one load value representative of the drag of the listels due to the friction of said listels in said element to be drilled, this step comprising the following sub-steps:
- determining at least one load value representative of the drag of said piercing device due to internal friction of said piercing device operating with said predetermined cutting parameters;
- subtracting, from said at least one load value representative of the overall drag, said at least one load value representative of the drag of said piercing device, the result of said subtraction being equal to said at least one load value representative of the drag of the listels.

3. The method according to claim 1 or 2, comprising a step of determining at least one load value representative of the cutting forces generated by the removal of material from said element to be drilled during a drilling operation, comprising the following sub-steps:
- measuring at least one load value during drilling of said element to be drilled with said predetermined cutting parameters;
- subtracting, from said at least one load value measured during drilling of said element to be drilled, said at least one load value representative of said overall drag, the result of said subtraction being equal to said at least one load value representative of the cutting forces.

4. The method according to claim 3 wherein said predetermined cutting parameters are reference cutting parameters specific to the group of materials to which the material being drilled belongs and to the type of drill implemented to carry out the drilling operation in progress, said method comprising a step of comparing said at least one load value representative of the cutting forces with predetermined intervals of reference load value representative of the cutting forces, each of said intervals being specific to one of the materials of said group.

5. The method according to claim 4 comprising a step of stopping the drilling operation in progress and/or emitting a warning signal when said at least one load value representative of the cutting forces does not belong to any one of said reference load value intervals representative of the cutting forces.

6. The method according to claim 2, comprising a step of verifying the friction of said listels comprising:
- comparing said at least one load value representative of the drag of the listels with a predetermined threshold value;
- detecting an abnormal friction of said listels when said at least one load value representative of the drag of the listels becomes greater than said predetermined threshold value.

7. The method according to claim 6 comprising a stripping step when it is detected that the friction of the listels is abnormal.

8. The method according to claim 3 wherein said predetermined cutting parameters are predetermined material cutting parameters specific to the material being drilled and to the type of drill implemented to perform the drilling operation in progress, said method comprising a step of verifying the cutting forces comprising the comparison of said at least one load value representative of the cutting forces with a predetermined standard interval of material cutting load values specific to the material being drilled for a drill whose cutting edges have the minimum quality required for correct drilling and for said predetermined material cutting parameters.

9. The method according to claim 8, wherein said step of verifying the cutting forces comprises detecting anomalous cutting forces when said at least one load value representative of the cutting forces is not comprised in said standard interval of material cutting load values.

10. The method according to claims 3, 4 and 8, comprising a step of identifying the material being drilled, said identification step comprising:
- a step of activating or maintaining the reference cutting parameters specific to the group of materials to which the material being drilled belongs and to the type of drill implemented to carry out the drilling operation in progress;
- a step of determining the material being drilled, said material being drilled being that of which the interval of reference load values representative of the cutting forces contains said at least one load value representative of the cutting forces;
- a step of activating predetermined material cutting parameters specific to the material identified in said determination step and to the type of drill implemented;
- a step of determining at least one load value representative of the cutting forces with said material cutting parameters;
- a step of validating the material identified during said determination step, said determination of the material being validated when the at least one load value representative of the cutting forces, determined by implementing said material cutting parameters, belongs to a predetermined interval of load values representative of the cutting forces with said material cutting parameters for the identified material.

11. A piercing device (10) intended to be implemented to carry out at least one operation of drilling an element to be drilled, comprising a stack of successive layers of different materials, by means of a cutting tool (13) comprising listels (133) and cutting edges (131), said device comprising means for determining at least one load value representative of the overall drag due to internal friction of said piercing device and to the friction of said listels in said element to be drilled, said means for determining at least one load value representative of said overall drag comprising
- a controller (19) realized to carry out the steps of a drilling method according to any one of claims 1 to 10;
- means for stopping the drilling operation in progress;
- means for partially retracting said cutting tool over a predetermined distance, said predetermined distance being chosen such that said cutting edges are no longer in contact with said element to be drilled while the listels are still inside the hole being drilled in the element to be drilled;
- means for driving said cutting tool with predetermined cutting parameters;
- means for measuring at least one load value while driving said cutting tool with said cutting parameters before its cutting edges again contact said element to be drilled, and after stabilisation of said load values,
the at least one load value thus measured being said at least one load value representative of the overall drag due to internal friction of said piercing device and to the friction of said listels in said element to be drilled.

12. The device according to claim 11 comprising means for determining at least one load value representative of the drag of the listels due to the friction of said listels in said element to be drilled, these means comprising:
- means for determining at least one load value representative of the drag of said piercing device due to internal friction of said piercing device operating with said predetermined cutting parameters;
- means for subtracting, from said at least one load value representative of the overall drag, said at least one load value representative of the drag of said piercing device, the result of said subtraction being equal to said at least one load value representative of the drag of the listels.

13. The device according to claim 11 or 12 comprising means for determining at least one load value representative of the cutting forces generated by the removal of material from said element to be drilled during a drilling operation, these means comprising:
- means for measuring at least one load value during drilling of said element to be drilled with said predetermined cutting parameters;
- means for subtracting, from said at least one load value measured during drilling of said element to be drilled, said at least one load value representative of said overall drag, the result of said subtraction being equal to said at least one load value representative of the cutting forces.

14. The device according to claim 13 wherein said predetermined cutting parameters are reference cutting parameters specific to the group of materials to which the material being drilled belongs and to the type of drill implemented to carry out the drilling operation in progress, said device comprising means for comparing said at least one load value representative of the cutting forces with predetermined intervals of reference load value representative of the cutting forces, each of said intervals being specific to one of the materials of said group.

15. The device according to claim 14 comprising means for stopping the drilling operation in progress and/or emitting a warning signal when said at least one load value representative of the cutting forces does not belong to any one of said reference load value intervals representative of the cutting forces.

16. The device according to claim 12, comprising means for verifying the friction of said listels comprising:
- means for comparing said at least one load value representative of the drag of the listels with a predetermined threshold value;
- means for detecting an abnormal friction of said listels when said at least one load value representative of the drag of the listels becomes greater than said predetermined threshold value.

17. The device according to claim 16 comprising means for controlling a stripping when it is detected that the friction of the listels is abnormal.

18. The device according to claim 13 wherein said predetermined cutting parameters are predetermined material cutting parameters specific to the material being drilled and to the type of drill implemented to perform the drilling operation in progress, said device comprising means for verifying the cutting forces comprising means for comparing said at least one load value representative of the cutting forces with a predetermined standard interval of material cutting load values specific to the material being drilled for a drill whose cutting edges have the minimum quality required for correct drilling and for said predetermined material cutting parameters.

19. The device according to claim 18 comprising means for detecting anomalous cutting forces when said at least one load value representative of the cutting forces is not comprised in said standard interval of material cutting load values.

20. The device according to claims 13, 14 and 19, comprising means for identifying the material being drilled, said identification means comprising:
- means for activating or maintaining the reference cutting parameters specific to the group of materials to which the material being drilled belongs and to the type of drill implemented to carry out the drilling operation in progress;
- means for determining the material being drilled, said material being drilled being that of which the interval of reference load values representative of the cutting forces contains said at least one load value representative of the cutting forces;
- means for activating predetermined material cutting parameters specific to the material identified in said determination step and to the type of drill implemented;
- means for determining at least one load value representative of the cutting forces with said material cutting parameters;
- means for validating the material identified during said determination step, said determination of the material being validated when the at least one load value representative of the cutting forces, determined by implementing said material cutting parameters, belongs to a predetermined interval of load values representative of the cutting forces with said material cutting parameters for the identified material.
